# EUROPEAN PATENT APPLICATION

(11) **EP 4 715 555 A1**
(43) Date of publication of application: **25.03.2026**
(21) Application number: 24838352.3
(22) Date of filing: 21.03.2024
(51) Int. Cl.: G06F 3/0485

(54) **DISPLAY CONTROL METHOD AND ELECTRONIC DEVICE**

(30) Priority: 11.07.2023 CN 202310846564
(71) Applicant: Honor Device Co., Ltd., Shenzhen, Guangdong 518040 (CN)
(72) Inventor: ZHAO, Heping, Shenzhen, Guangdong 518040 (CN); NING, Xin, Shenzhen, Guangdong 518040 (CN); WANG, Yaosheng, Shenzhen, Guangdong 518040 (CN); WANG, Boning, Shenzhen, Guangdong 518040 (CN)
(74) Representative: Thun, Clemens
(86) International application number: PCT/CN2024/083060
(87) International publication number: WO 2025/011092

(57) **Abstract**

Embodiments of this application disclose a display control method and an electronic device, and relate to the field of electronic devices, so that the electronic device can use different sliding policies in different usage scenarios, thereby improving usage experience of a user. Specific solutions are as follows: The electronic device displays a first page; the electronic device receives a first sliding operation of the user sliding along a first direction on the first page; and the electronic device controls, based on a target sliding processing policy in response to the first sliding operation, the first page to slide along the first direction, where when the target sliding processing policy is a first sliding processing policy, duration for which the first page is slid along the first direction is first duration, and a distance for which the first page is slid is a first distance; or when the target sliding processing policy is the second sliding processing policy, duration for which the first page is slid along the first direction is second duration, a distance for which the first page is slid is a second distance, where the first duration is greater than the second duration, and the first distance is greater than the second distance.

## Description

This application claims priority to Chinese Patent Application No. 202310846564.6, filed with the China National Intellectual Property Administration on July 11, 2023 and entitled "DISPLAY CONTROL METHOD AND ELECTRONIC DEVICE", which is incorporated herein by reference in its entirety.

### TECHNICAL FIELD

This application relates to the field of electronic devices, and in particular, to a display control method and an electronic device.

### BACKGROUND

With the development of electronic device technologies, a user may perform a sliding operation on a screen of an electronic device such as a mobile phone, so that the electronic device may display corresponding content in a scrolling manner.

When the user performs the sliding operation on the screen of the electronic device such as the mobile phone, a sliding policy used by the electronic device is usually a single sliding policy, and cannot be applicable to different usage scenarios.

### SUMMARY

Embodiments of this application provide a display control method and an electronic device, to enable the electronic device to use different sliding policies in different usage scenarios, thereby improving usage experience of a user.

To achieve the foregoing objective, the following technical solutions are used in embodiments of this application.

According to a first aspect, an embodiment of this application provides a display control method, applied to an electronic device. The electronic device may include at least two sliding processing policies. The display control method may include: The electronic device displays a first page; the electronic device receives a first sliding operation of a user sliding along a first direction on the first page; and the electronic device controls, based on a target sliding processing policy in response to the first sliding operation, the first page to slide along the first direction, where the at least two sliding processing policies include a first sliding processing policy and a second sliding processing policy; and when the target sliding processing policy is the first sliding processing policy, duration for which the first page is slid along the first direction is first duration, and a distance for which the first page is slid is a first distance; or when the target sliding processing policy is the second sliding processing policy, duration for which the first page is slid along the first direction is second duration, a distance for which the first page is slid is a second distance, where the first duration is greater than the second duration, and the first distance is greater than the second distance.

Based on the method according to the first aspect, the electronic device may determine different sliding processing policies based on a usage scenario of the electronic device, so that the electronic device can control, based on the different sliding processing policies, a page to slide. Due to the different sliding processing policies, when the page of the electronic device is slid, duration and a distance for which the page is slid both vary. Therefore, when the electronic device controls, based on a quick sliding processing policy (namely, the first sliding processing policy), the page of the electronic device to slide, the duration for which the page of the electronic device is slid may be enabled to be relatively long, and the distance for which the page is slid may be enabled to be relatively long. Therefore, content newly loaded on the page of the electronic device after the page of the electronic device responds to the sliding operation is relatively much, which can enable the subjective smoothness feeling of the user to be better. When the electronic device controls, based on a slow sliding processing policy (namely, the second sliding processing policy), the page of the electronic device to slide, the duration for which the page of the electronic device is slid may be enabled to be relatively short, and the distance for which the page is slid may be enabled to be relatively short. Therefore, content newly loaded on the page of the electronic device after the page of the electronic device responds to the sliding operation is relatively little, which can enable the user to see clearly and focus more easily. Therefore, according to the solution of this application, the electronic device can use different sliding policies in different usage scenarios, thereby improving usage experience of the user in the different usage scenarios.

With reference to the first aspect, in another possible implementation, the first page may be slid at a first initial velocity and a first friction coefficient when the electronic device executes the first sliding processing policy. The first page may be slid at a second initial velocity and a second friction coefficient when the electronic device executes the second sliding processing policy. The first initial velocity is greater than the second initial velocity, and the first friction coefficient is less than the second friction coefficient.

Based on the possible implementation, because the first initial velocity corresponding to the first sliding processing policy is relatively high, and the first friction coefficient corresponding to the first sliding processing policy is relatively small, when the electronic device controls, based on the first sliding processing policy, the page of the electronic device to slide, the duration for which the page of the electronic device is slid may be enabled to be relatively long, and the distance for which the page is slid may be enabled to be relatively long. Therefore, content newly loaded on the page of the electronic device after the page of the electronic device responds to the sliding operation is relatively much, which can enable the subjective smoothness feeling of the user to be better. Because the second initial velocity corresponding to the second sliding processing policy is relatively low, and the second friction coefficient corresponding to the second sliding processing policy is relatively large, when the electronic device controls, based on the second sliding processing policy, the page of the electronic device to slide, the duration for which the page of the electronic device is slid may be enabled to be relatively short, and the distance for which the page is slid may be enabled to be relatively short. Therefore, content newly loaded on the page of the electronic device after the page of the electronic device responds to the sliding operation is relatively little, which can enable the user to see clearly and focus more easily.

With reference to the first aspect, in another possible implementation, the electronic device is a foldable electronic device, and before the electronic device controls, based on the target sliding processing policy, the first page to slide along the first direction, the display control method may further include: determining, when a usage scenario of the foldable electronic device is a large-screen scenario, that the target sliding processing policy is the second sliding processing policy, where the large-screen scenario includes that the foldable electronic device is in an unfolded state; or determining, when the usage scenario of the foldable electronic device is a small-screen scenario, that the target sliding processing policy is the first sliding processing policy, where the small-screen scenario includes that the foldable electronic device is in a folded state.

Based on the possible implementation, when the foldable electronic device is in the unfolded state, the foldable electronic device controls, based on the second sliding processing policy (namely, the slow sliding processing policy), the page to slide, so that the duration for which the page of the foldable electronic device is slid may be enabled to be relatively short, and the distance for which the page is slid may be enabled to be relatively short. Therefore, content newly loaded on the page of the electronic device after the page of the electronic device responds to the sliding operation is relatively little, which can enable the user to see clearly and focus more easily. In addition, when the foldable electronic device is in the unfolded state, duration for which the page is slid is relatively short and a distance for which the page is slid is relatively short. Therefore, content newly loaded on the page of the electronic device after the page of the electronic device responds to the sliding operation is relatively little, thereby reducing power consumption of the electronic device. In addition, a problem of displaying a white block or a black block by the electronic device due to that relatively much content is newly loaded and the new content is relatively slowly loaded can be avoided, thereby improving usage experience of the user.

With reference to the first aspect, in another possible implementation, before the electronic device controls, based on the target sliding processing policy, the first page to slide along the first direction, the display control method may further include: determining, when a usage scenario of the electronic device is a power-saving mode scenario, that the target sliding processing policy is the second sliding processing policy; or determining, when the usage scenario of the electronic device is a non-power-saving mode scenario, that the target sliding processing policy is the first sliding processing policy.

Based on the possible implementation, when the usage scenario of the electronic device is the power-saving mode scenario, the electronic device controls, based on the second sliding processing policy (namely, the slow sliding processing policy), the page to slide, so that the duration for which the page of the electronic device is slid may be enabled to be relatively short, and the distance for which the page is slid may be enabled to be relatively short. Therefore, content newly loaded on the page of the electronic device after the page of the electronic device responds to the sliding operation is relatively little, which can enable the user to see clearly and focus more easily. In addition, when the usage scenario of the electronic device is the power-saving mode scenario, because the electronic device is based on the second sliding processing policy, the duration for which the page is slid is relatively short and the distance for which the page is slid is relatively short. Therefore, content newly loaded on the page of the electronic device after the page of the electronic device responds to the sliding operation is relatively little, so that power consumption of the electronic device can be reduced, thereby saving power.

With reference to the first aspect, in another possible implementation, before the electronic device controls, based on the target sliding processing policy, the first page to slide along the first direction, the display control method may further include: determining, when a usage scenario of the electronic device is a high-temperature scenario, that the target sliding processing policy is the second sliding processing policy, where the high-temperature scenario includes that a temperature of the electronic device is greater than or equal to a temperature threshold; or determining, when the usage scenario of the electronic device is a non-high-temperature scenario, that the target sliding processing policy is the first sliding processing policy, where the non-high-temperature scenario includes that the temperature of the electronic device is less than the temperature threshold.

Based on the possible implementation, when the temperature of the electronic device is greater than the temperature threshold, the electronic device controls, based on the second sliding processing policy (namely, the slow sliding processing policy), the page to slide, so that the duration for which the page of the electronic device is slid may be enabled to be relatively short, and the distance for which the page is slid may be enabled to be relatively short. Therefore, content newly loaded on the page of the electronic device after the page of the electronic device responds to the sliding operation is relatively little, which can enable the user to see clearly and focus more easily. In addition, when the temperature of the electronic device is greater than the temperature threshold, the duration for which the page is slid is relatively short and the distance for which the page is slid is relatively short. Therefore, content newly loaded on the page of the electronic device after the page of the electronic device responds to the sliding operation is relatively little, so that power consumption of the electronic device can be reduced, thereby reducing the temperature of the electronic device.

With reference to the first aspect, in another possible implementation, before the electronic device controls, based on the target sliding processing policy, the first page to slide along the first direction, the display control method may further include: determining, when a usage scenario of the electronic device is a non-text scenario, that the target sliding processing policy is the second sliding processing policy, where the non-text scenario includes that a data amount of to-be-displayed content is greater than or equal to a data amount threshold, a type of the to-be-displayed content includes an image type or a video type, or a data amount of a text type in the to-be-displayed content is less than a data amount of the image type and/or the video type; or determining, when the usage scenario of the electronic device is a text scenario, that the target sliding processing policy is the first sliding processing policy, where the text scenario includes that the data amount of the to-be-displayed content is less than the data amount threshold, the type of the to-be-displayed content is the text type, or the data amount of the text type in the to-be-displayed content is greater than the data amount of the image type and/or the video type; and the to-be-displayed content is content newly loaded on the first page after the first page responds to the first sliding operation.

Based on the possible implementation, when the data amount of the to-be-displayed content is greater than or equal to the data amount threshold, the type of the to-be-displayed content includes the image type or the video type, or the data amount of the text type in the to-be-displayed content is less than the data amount of the image type and/or the video type, the electronic device controls, based on the second sliding processing policy (namely, the slow sliding processing policy), the page to slide, so that the duration for which the page of the electronic device is slid may be enabled to be relatively short, and the distance for which the page is slid may be enabled to be relatively short. Therefore, content newly loaded on the page of the electronic device after the page of the electronic device responds to the sliding operation is relatively little, which can enable the user to see clearly and focus more easily. In addition, because the electronic device uses the second sliding processing policy, the duration for which the page is slid is relatively short and the distance for which the page is slid is relatively short. Therefore, content newly loaded on the page of the electronic device after the page of the electronic device responds to the sliding operation is relatively little, so that power consumption of the electronic device can be reduced, which can enable the subjective smoothness feeling of the user to be better. In addition, a problem of displaying a white block or a black block by the electronic device due to that relatively much content is newly loaded and the new content is relatively slowly loaded can be avoided, thereby improving usage experience of the user.

With reference to the first aspect, in another possible implementation, before the electronic device controls, based on the target sliding processing policy, the first page to slide along the first direction, the display control method may further include: determining, when an application corresponding to the first page is an application in a slow sliding application list, that the target sliding processing policy is the second sliding processing policy; or determining, when the application corresponding to the first page is an application in a quick sliding application list, that the target sliding processing policy is the first sliding processing policy.

Based on the possible implementation, a type of a first application may be quickly determined by using the quick sliding application list or the slow sliding application list, so that whether the target sliding processing policy used by the electronic device is the quick sliding processing policy (namely, the first sliding processing policy) or the slow sliding processing policy (namely, the second sliding processing policy) can be quickly determined based on the type of the first application.

With reference to the first aspect, in another possible implementation, after the electronic device controls, based on the target sliding processing policy, the first page to slide along the first direction, the display control method may further include: determining whether the usage scenario of the foldable electronic device is a power-saving mode scenario; adjusting the target sliding processing policy to the second sliding processing policy when the usage scenario of the foldable electronic device is the power-saving mode scenario; receiving, by the foldable electronic device, a second sliding operation of the user sliding along the first direction on the first page; and controlling, by the foldable electronic device based on the second sliding processing policy in response to the second sliding operation, the first page to slide along the first direction; and determining whether the usage scenario of the foldable electronic device is a text scenario; adjusting the target sliding processing policy to the first sliding processing policy when the usage scenario of the foldable electronic device is the text scenario; receiving, by the foldable electronic device, a third sliding operation of the user sliding along the first direction on the first page; and controlling, by the foldable electronic device based on the first sliding processing policy in response to the third sliding operation, the first page to slide along the first direction.

Based on the possible implementation, when the usage scenario of the foldable electronic device is to be determined, whether scenarios of the foldable electronic device are the small-screen scenario, the power-saving mode scenario, and the text scenario may be sequentially determined, to accurately determine sliding processing policies.

According to a second aspect, an embodiment of this application further provides a display control method, applied to a foldable electronic device. The foldable electronic device may include a first screen body and a second screen body that are relatively disposed. A display area of the second screen body is greater than a display area of the first screen body. The display control method may include: controlling, when the foldable electronic device is in a folded state, the first screen body to display a first page; receiving a first sliding operation of a user on the first screen body along a first direction; and sliding the first page along the first direction for first duration in response to the first sliding operation, where a distance for which the first page is slid is a first distance; or controlling, when the foldable electronic device is in an unfolded state, the second screen body to display the first page; receiving the first sliding operation of the user on the second screen body along the first direction; and sliding the first page along the first direction for second duration in response to the first sliding operation, where a distance for which the first page is slid is a second distance, where the first duration is greater than the second duration, and the first distance is greater than the second distance.

Based on the method according to the second aspect, when the foldable electronic device is in the unfolded state, the foldable electronic device controls, based on the second sliding processing policy (namely, a slow sliding processing policy), a page to slide, so that duration for which the page of the foldable electronic device is slid may be enabled to be relatively short, and a distance for which the page is slid may be enabled to be relatively short. Therefore, content newly loaded on the page of the electronic device after the page of the electronic device responds to a sliding operation is relatively little, which can enable the user to see clearly and focus more easily. In addition, when the foldable electronic device is in the unfolded state, because the foldable electronic device is based on the second sliding processing policy, duration for which the page is slid is relatively short and a distance for which the page is slid is relatively short. Therefore, content newly loaded on the page of the foldable electronic device after the page of the foldable electronic device responds to the sliding operation is relatively little, thereby reducing power consumption of the foldable electronic device. In addition, a problem of displaying a white block or a black block by the foldable electronic device due to that relatively much content is newly loaded and the new content is relatively slowly loaded can be avoided, thereby improving usage experience of the user.

According to a third aspect, an embodiment of this application provides a display control apparatus. The display control apparatus may be used in an electronic device to implement the method in the first aspect. Functions of the display control apparatus may be implemented by hardware or may be implemented by hardware by executing corresponding software. The hardware or software includes one or more modules corresponding to the functions, for example, a display module, a receiving module, and a control module.

The display module may be configured to display a first page.

The receiving module may be configured to receive a first sliding operation of the user sliding along a first direction on the first page.

The control module may be configured to control, based on a target sliding processing policy in response to the first sliding operation, the first page to slide along the first direction, where the at least two sliding processing policies include a first sliding processing policy and a second sliding processing policy; and when the target sliding processing policy is the first sliding processing policy, duration for which the first page is slid along the first direction is first duration, and a distance for which the first page is slid is a first distance; or when the target sliding processing policy is the second sliding processing policy, duration for which the first page is slid along the first direction is second duration, a distance for which the first page is slid is a second distance, where the first duration is greater than the second duration, and the first distance is greater than the second distance.

According to a fourth aspect, a display control device is provided. The display control device has a function of implementing the method according to the first aspect or the second aspect. The function may be implemented by hardware or may be implemented by hardware by executing corresponding software. The hardware or software includes one or more modules corresponding to the function.

According to a fifth aspect, a display control device is provided, including: a processor and a memory. The memory is configured to store computer-executable instructions. When the display control device runs, the processor executes the computer-executable instructions stored in the memory, to enable the display control device to perform the display control method according to any one of the first aspect or the second aspect.

According to a sixth aspect, a display control device is provided, including: a processor. The processor is configured to: couple to a memory, and perform, after reading instructions in the memory, the display control method according to any one of the first aspect or the second aspect based on the instructions.

According to a seventh aspect, an embodiment of this application provides a computer-readable storage medium, storing computer program instructions thereon. When the computer program instructions are executed by an electronic device, the electronic device is enabled to implement the display control method according to any one of the first aspect or the possible implementations of the first aspect, or the electronic device is enabled to implement the display control method according to the second aspect.

According to an eighth aspect, an embodiment of this application provides a computer program product, including computer-readable code. When the computer-readable code runs in an electronic device, the electronic device is enabled to implement the display control method according to any one of the first aspect or the possible implementations of the first aspect, or the electronic device is enabled to implement the display control method according to the second aspect.

According to a ninth aspect, an apparatus (for example, the apparatus may be a chip system) is provided. The apparatus includes a processor, configured to support an electronic device in implementing the functions in the first aspect or the second aspect. In a possible design, the apparatus further includes a memory. The memory is configured to store program instructions and data necessary to the electronic device. When the apparatus is the chip system, the apparatus may include a chip, or may include a chip and another discrete component.

It should be understood that, for beneficial effects of the second aspect to the ninth aspect, refer to the related descriptions in the first aspect. Details are not described herein again.

### BRIEF DESCRIPTION OF DRAWINGS

FIG. 1A and FIG. 1B are a diagram 1 of a display interface of an electronic device in a related technology;
FIG. 2A and FIG. 2B are a diagram 2 of a display interface of an electronic device in a related technology;
FIG. 3 is a schematic diagram of a sliding curve policy according to an embodiment of this application;
FIG. 4 is a diagram of a hardware structure of an electronic device according to an embodiment of this application;
FIG. 5 is a schematic flowchart 1 of a display control method according to an embodiment of this application;
FIG. 6A, FIG. 6B, FIG. 6C, and FIG. 6D are a diagram of a display interface of an electronic device according to an embodiment of this application;
FIG. 7 is a schematic flowchart 2 of a display control method according to an embodiment of this application;
FIG. 8 is a schematic flowchart 3 of a display control method according to an embodiment of this application; and
FIG. 9 is a diagram of a structure of a display control apparatus according to an embodiment of this application.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the description of this application, unless otherwise stated, "a plurality of" means two or more than two.

With the development of electronic device technologies, a user may perform a sliding operation on a screen of an electronic device such as a mobile phone, so that the electronic device may display corresponding content in a scrolling manner.

When the user performs the sliding operation on the screen of the electronic device such as the mobile phone, to ensure accuracy of identifying the sliding operation of the user by the electronic device, the electronic device uses a slow sliding curve rate policy.

A sliding curve rate policy (which may also be referred to as a sliding policy or a sliding processing policy) is a policy used by an operating system of an electronic device to process and adjust a response velocity and a curve of a sliding event when a user performs a sliding operation on a touchscreen by using a finger. In other words, the sliding curve rate policy adjusts the response velocity of the sliding event in a sliding process based on a gesture input of the user, to achieve a smoother and more natural sliding effect. In this way, user experience can be improved, and the sliding operation is enabled to be smoother and more responsive. Common scenarios of a sliding curve are list sliding, sliding on a page with a hand, and the like. A negative exponential function of e commonly used for the sliding curve is a moderated attenuation curve, and may be used for velocity or displacement attenuation.

The sliding curve rate policy may include a velocity gain parameter. The sliding curve policy may be adjusted by adjusting the velocity gain parameter. The velocity gain parameter may include an initial velocity gain and a friction coefficient. The initial velocity gain is an initial velocity at which the electronic device processes the sliding event when the electronic device recognizes that the sliding operation is started. In other words, the initial velocity gain may determine a starting state and an initial velocity of sliding.

The friction coefficient is a coefficient by which the electronic device gradually reduces and adjusts, based on strength and a direction of the sliding operation, a processing velocity of the sliding event, to simulate a physical effect in the real world.

The slow sliding curve rate policy is a policy in which a rate at which the electronic device processes and adjusts the response velocity and the curve (to be specific, a sliding curve when the user performs the sliding operation on the screen of the electronic device) of the sliding event is relatively low when the user performs the sliding operation on the touchscreen by using the finger. An initial velocity gain included in the slow sliding curve rate policy is relatively small, and a friction coefficient is relatively large, so that the rate at which the electronic device processes and adjusts the response velocity and the curve of the sliding event by using the slow sliding curve rate policy is relatively low.

However, when the user performs a quick sliding operation on the screen of the electronic device such as the mobile phone, because the electronic device uses the slow sliding curve rate policy, a rate at which the electronic device processes and adjusts a response velocity and a curve of a sliding event by using the slow sliding curve rate policy is relatively low. Consequently, the user is caused to feel that the electronic device responds relatively slowly, affecting usage experience of the user.

The following describes in detail a case in which the rate at which the electronic device processes and adjusts the response velocity and the curve (to be specific, the sliding curve when the user performs the sliding operation on the screen of the electronic device) of the sliding event by using the slow sliding curve rate policy is relatively low. Consequently, the user is caused to feel that the electronic device responds relatively slowly. When the electronic device uses the slow sliding curve rate policy, regardless of a velocity at which the user or slides on the screen of the electronic device is high or low, the electronic device uses the same slow sliding curve rate policy. For example, as shown in Table 1, when a user sliding velocity is a low velocity, a medium velocity, or a high velocity, a slow sliding curve rate policy used by the electronic device has a same velocity gain parameter.

**Table 1**

| User sliding velocity | Velocity gain parameter |
|---|---|
| High velocity | 1. Friction coefficient |
| Medium velocity | 2. Initial velocity gain |
| Low velocity | |

It can be learned with reference to Table 1 that when the user slides for a particular distance on the screen of the electronic device by using a relatively low velocity, the electronic device uses a relatively small initial velocity gain and a relatively large friction coefficient that correspond to the slow sliding curve rate policy, so that a scrolled range of the screen of the electronic device is relatively small, in other words, the electronic device displays relatively little content in a scrolling manner. However, when the user slides for the same distance on the screen of the electronic device by using a relatively high velocity based on the same angle, the same curve, and the same force, because the electronic device uses the same friction coefficient and initial velocity gain, where the initial velocity gain is relatively small, and the friction coefficient is relatively large, a scrolled range of the screen of the electronic device is still relatively small, in other words, the electronic device still displays relatively little content in the scrolling manner. Consequently, the user is caused to feel that the electronic device responds relatively slowly, affecting the usage experience of the user.

In addition, code of a slow sliding curve rate policy used by an electronic device in a related technology is as follows:
<param name="high freq_smart slide model config">
<slide_param name="switch"value="1"/>
<slide param name="low_velocity_friction_gain"value="0.7"/>
<slide_param name="low _velocity_init_velocity_gain"value="0.6"/>
<slide param name="medium_velocity_level"value="5000.0"/>
<slide_param name="medium _velocity_friction_gain"value="0.7"/>
<slide_param name="medium _velocity_init_velocity_gain"value="0.6"/>
<slide param name-"high_velocity_level"value"*15000.0"1>*
<slide_param name="high _velocity_friction gain"value="0.7"/>
<slide_param name="high_velocity_init_velocity_gain"value="0.6"/>

It can be learned based on the code of the slow sliding curve rate policy that, when the electronic device uses the slow sliding curve rate policy, when a sliding velocity of a user is a high velocity, an initial velocity gain (namely, high_velocity_init_velocity_gain) is 0.6, and a friction coefficient (namely, high_velocity_friction_gain) is 0.7. When the sliding velocity of the user is a medium velocity, the initial velocity gain (namely, medium_velocity_init_velocity_gain) is 0.6, and the friction coefficient (namely, medium_velocity _friction_gain) is 0.7. When the sliding velocity of the user is the high velocity, the initial velocity gain (namely, low_velocity_init_velocity_gain) is 0.6, and the friction coefficient (namely, low_velocity_friction_gain) is 0.7. Therefore, it can be learned with reference to the code of the slow sliding curve rate policy that, regardless of a velocity at which the user slides on the screen of the electronic device is high or low, or when usage scenarios of the electronic device (for example, a folded screen of a folded-screen mobile phone is in an unfolded state or the folded screen is in a folded state) are different, the electronic device uses the same slow sliding curve rate policy.

Because the electronic device uses the same slow sliding curve rate policy, when the velocity at which the user slides on the screen of the electronic device is high, the user is caused to feel that the electronic device responds relatively slowly, affecting the usage experience of the user.

To resolve the foregoing problem that the user is caused to feel that the electronic device responds relatively slowly because the rate at which the electronic device processes and adjusts the response velocity and the curve (to be specific, the sliding curve when the user performs the sliding operation on the screen of the electronic device) of the sliding event by using the slow sliding curve rate policy is relatively low, in the related technology, the electronic device may use a quick sliding curve rate policy, so that the electronic device processes and adjusts the response velocity and the curve of the sliding event at a relatively high rate, thereby avoiding that the user feels that the electronic device responds relatively slowly.

An initial velocity gain of the quick sliding curve rate policy is relatively large relative to the initial velocity gain of the slow sliding curve rate policy, and a friction coefficient of the quick sliding curve rate policy is relatively small relative to the friction coefficient of the slow sliding curve rate policy. In other words, when the electronic device uses the quick curve rate policy, if the electronic device identifies that a sliding operation is started, an initial velocity at which the electronic device processes a sliding event is relatively high, and in a process of identifying the sliding operation, a friction coefficient is relatively small, a rate at which the electronic device processes and adjusts the response velocity and the curve of the sliding event is relatively high.

When the electronic device uses the quick sliding curve rate policy, regardless of a velocity at which the user slides on the screen of the electronic device is high or low, or when usage scenarios of the electronic device are different (for example, a folded screen of a folded-screen mobile phone is in an unfolded state or the folded screen is in a folded state), the electronic device still uses the same slow sliding curve rate policy.

Code of a quick sliding curve rate policy used by an electronic device in a related technology is as follows:
<param name="high freq_smart slide model config">
<slide_param name="switch"value=" 1"/>
<slide param name="low_velocity_friction_gain"value="0.6"/>
<slide_param name="low_velocity_init_velocity_gain"value="0.8"/>
<slide param name="medium _velocity_level"value="5000.0"/>
<slide_param name="medium _velocity_friction_gain"value="0.6"/>
<slide_param name="medium _velocity_init_velocity_gain"value="0.8"/>
<slide param name-"high_velocity_level"value" 15000.0"/*>*
<slide_param name="high _velocity_friction gain"value="0.6"/>
<slide_param name="high_velocity_init_velocity_gain"value="0.8"/>

It can be learned based on the code of the quick sliding curve rate policy that, when the electronic device uses the quick sliding curve rate policy, when a sliding velocity of a user is a high velocity, an initial velocity gain (namely, high_velocity_init_velocity_gain) is 0.8, and a friction coefficient (namely, high_velocity_friction_gain) is 0.6. When the sliding velocity of the user is a medium velocity, the initial velocity gain (namely, medium_velocity_init_velocity_gain) is 0.8, and the friction coefficient (namely, medium_velocity _friction_gain) is 0.6. When the sliding velocity of the user is the high velocity, the initial velocity gain (namely, low_velocity_init_velocity_gain) is 0.8, and the friction coefficient (namely, low_velocity_friction_gain) is 0.6. Therefore, it can be learned with reference to the code of the quick sliding curve rate policy that, regardless of a velocity at which the user slides on the screen of the electronic device is high or low, or when usage scenarios of the electronic device (for example, a folded screen of a folded-screen mobile phone is in an unfolded state or the folded screen is in a folded state) are different, the electronic device uses the same quick sliding curve rate policy.

When the user slides for a particular distance on the screen of the electronic device by using a relatively low velocity, the electronic device uses a relatively large initial velocity gain and a relatively small friction coefficient that correspond to the quick sliding curve rate policy, so that a scrolled range of the screen of the electronic device is relatively large, in other words, the electronic device displays relatively much content in a scrolling manner. However, when the user slides for the same distance on the screen of the electronic device by using a relatively high velocity based on the same angle, the same curve, and the same force, because the electronic device uses the same friction coefficient and initial velocity gain, where the initial velocity gain is relatively large, and the friction coefficient is relatively small, a scrolled range of the screen of the electronic device is still relatively large, in other words, the electronic device still displays relatively much content in the scrolling manner.

Because the electronic device uses the same quick sliding curve rate policy, the scrolled range of the screen of the electronic device may be relatively large, in other words, the electronic device displays relatively much content in the scrolling manner. When the scrolled range of the screen of the electronic device is relatively large, and the electronic device displays the relatively much content in the scrolling manner, if the electronic device relatively slowly displays to-be-displayed content, display of the to-be-displayed content is not completed, or a data amount of the to-be-displayed content is relatively large, the electronic device may display a white block or a black block at a corresponding position, or display a word "Loading". Consequently, the user is caused to feel that the displaying by the electronic device is relatively slow, affecting usage experience of the user.

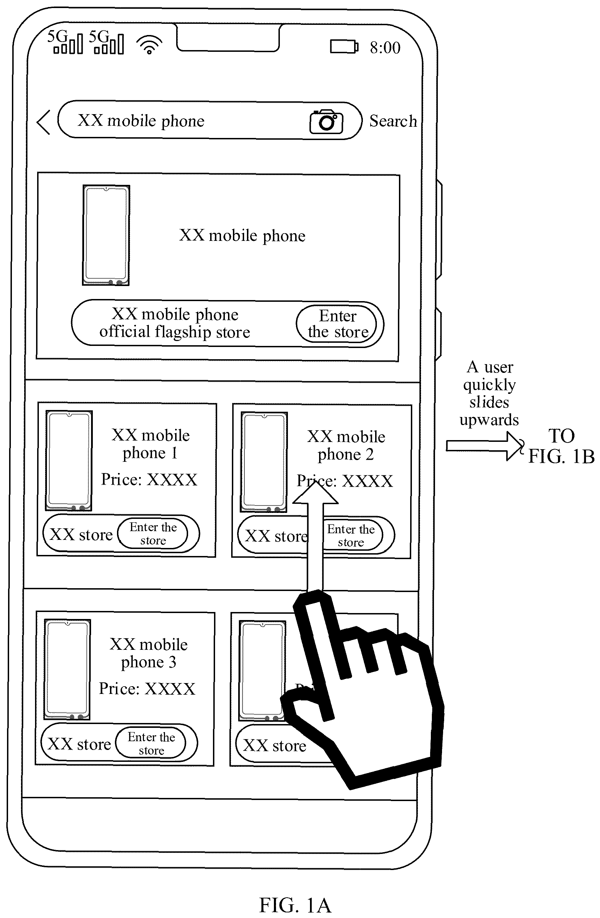

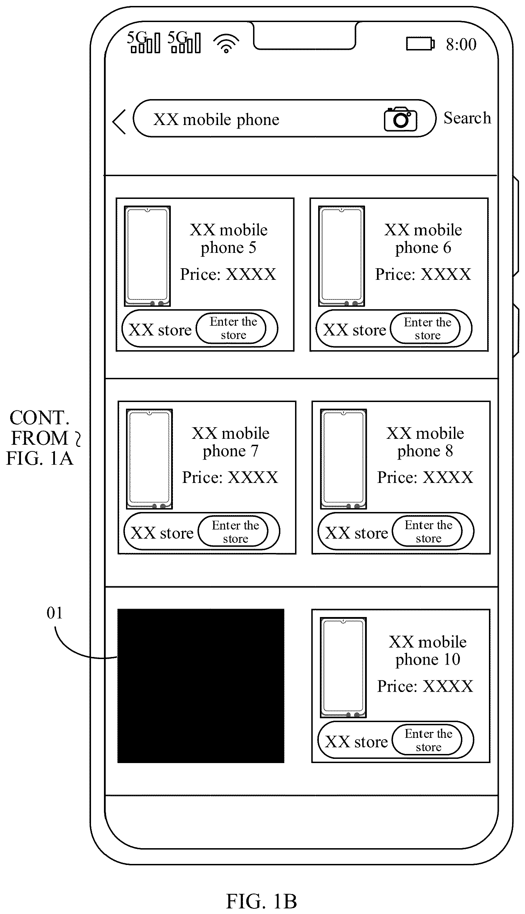

For example, an example in which the electronic device is a mobile phone and the mobile phone uses the quick sliding curve rate policy is used. With reference to FIG. 1A, after the user opens a shopping application on the mobile phone, the mobile phone displays an interface corresponding to the shopping application. When the user quickly slides upward on a screen of the mobile phone, because the mobile phone uses the quick sliding curve rate policy, the initial velocity gain corresponding to the quick sliding curve rate policy is relatively large, and the friction coefficient is relatively small, so that a scrolled range of the screen of the mobile phone is relatively large, in other words, the mobile phone displays relatively much content in a scrolling manner. Because the mobile phone displays the relatively much content in the scrolling manner, in other words, the mobile phone displays the relatively much content, if the mobile phone relatively slowly displays to-be-displayed content, in other words, when the display of the to-be-displayed content is not completed, as shown in FIG. 1B, the mobile phone displays a black block 01 at a corresponding position at which the display of the content is not completed. Consequently, the user is caused to feel that the displaying or the loading by the mobile phone is relatively slow, affecting usage experience of the user.

Because the electronic device uses the relatively large initial velocity gain and the relatively small friction coefficient that correspond to the quick sliding curve rate policy, the scrolled range of the screen of the electronic device is relatively large, in other words, the electronic device displays the relatively much content in the scrolling manner. Consequently, power consumption of the electronic device is relatively large. In some scenarios, the electronic device may be a folded-screen electronic device. The folded-screen electronic device may also be referred to as a foldable electronic device. When a folded screen of the electronic device is in an unfolded state (to be specific, the electronic device displays a page by using a large screen), in other words, the foldable electronic device may be in the unfolded state, the electronic device uses the relatively large initial velocity gain and the relatively small friction coefficient that correspond to the quick sliding curve rate policy, so that a scrolled range of the screen of the electronic device is relatively large, in other words, the electronic device displays relatively much content in a scrolling manner. Consequently, power consumption of the electronic device is relatively large.

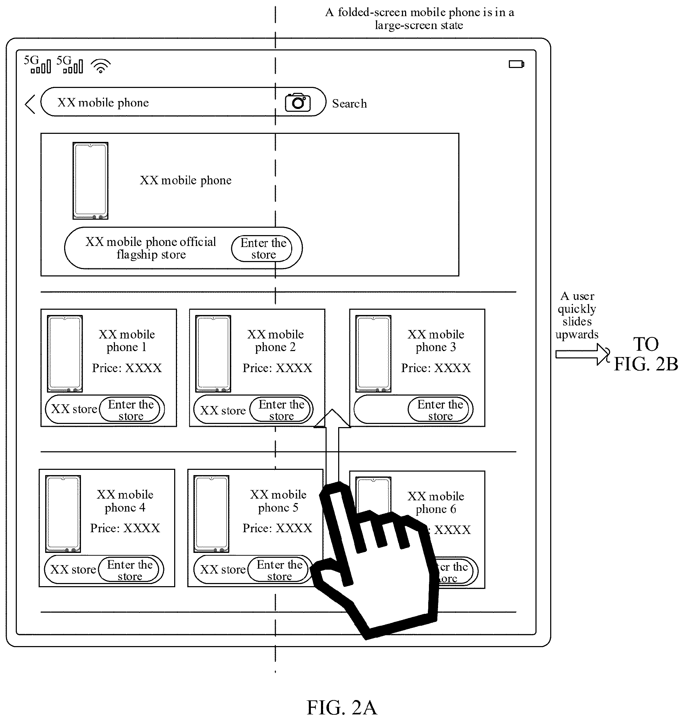

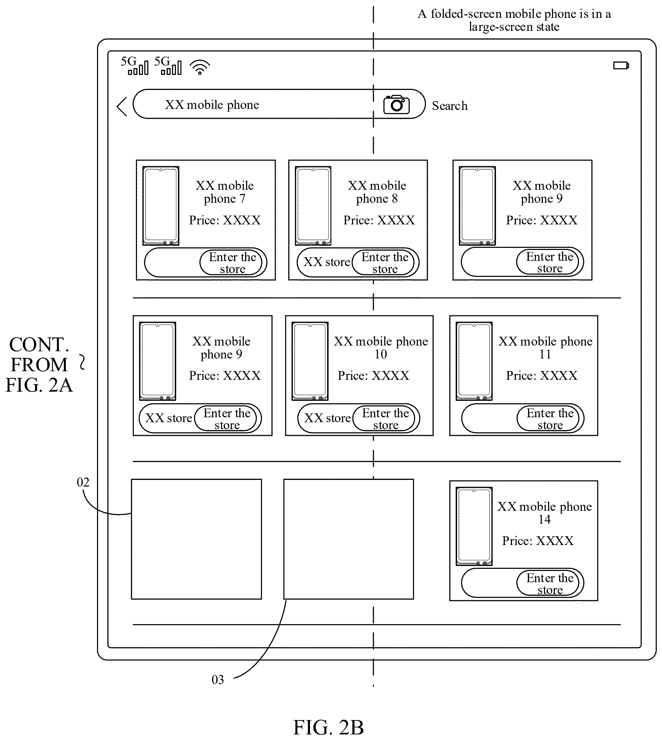

For example, an example in which the electronic device is the folded-screen mobile phone and the mobile phone uses the quick sliding curve rate policy is used. When the folded-screen mobile phone is in a large-screen state (in other words, a folded screen of the mobile phone is in an unfolded state), after the user opens a shopping application on the folded-screen mobile phone, with reference to FIG. 2A, the folded-screen mobile phone may display an interface corresponding to the shopping application. When the user quickly slides upward on a screen of the folded-screen mobile phone, because the folded-screen mobile phone uses the quick sliding curve rate policy, the initial velocity gain corresponding to the quick sliding curve rate policy is relatively large, and the friction coefficient is relatively small, so that a rolling range of the screen of the folded-screen mobile phone is relatively large, in other words, the mobile phone displays relatively much content in a scrolling manner. Because the folded-screen mobile phone displays the relatively much content in the scrolling manner, in other words, the folded-screen mobile phone displays the relatively much content, if the folded-screen mobile phone relatively slowly displays to-be-displayed content, in other words, when the display of to-be-displayed content is not completed, as shown in FIG. 2B, the folded-screen mobile phone displays a white block 02 and a white block 03 at corresponding positions at which the display of the content is not completed. Consequently, the user is caused to feel that the displaying by the mobile phone is relatively slow, affecting usage experience of the user. In addition, because the to-be-displayed content of the folded-screen mobile phone is relatively much, power consumption of the electronic device is relatively large.

A case in which power consumption of the electronic device is relatively large when the folded screen of the electronic device is in the unfolded state and the electronic device uses the quick sliding curve rate policy is described below with reference to Table 2.

**Table 2**

| Quantity of sliding times | First time | Second time | Third time | Average | Comparison |
|---|---|---|---|---|---|
| Quick sliding curve rate policy | 1259.43 | 1268.38 | 1263.62 | 1263.81 | |
| Slow sliding curve rate policy | 1222.64 | 1204.53 | 1166.34 | 1197.837 | -65.9733 |

It can be learned with reference to Table 2 that when the electronic device uses the quick sliding curve rate policy, when the user slides on the screen of the electronic device, average power consumption of the electronic device is 1263.81 milliamperes (milliamperes, mA). However, when the electronic device uses the slow sliding curve rate policy, and the user slides on the screen of the electronic device for the same distance by using the same sliding velocity based on the same angle, the same curve, and the same force, average power consumption of the electronic device is 1197.837 mA. It can be learned that when the folded screen of the electronic device is in the unfolded state and the quick sliding curve rate policy is used, power consumption of the electronic device is worsened by 65 mA compared with the power consumption of the electronic device used when the folded screen of the electronic device is in the unfolded state and the slow quick sliding curve rate policy is used. In other words, when the folded screen of the electronic device is in the unfolded state, and the electronic device uses the quick sliding curve rate policy, the power consumption of the electronic device is relatively large.

In some other scenarios, the electronic device may be a folded-screen electronic device. The folded-screen electronic device may also be referred to as a foldable electronic device. When a folded screen of the electronic device is in a folded state (to be specific, the electronic device displays a page by using a small screen), in other words, the foldable electronic device is in the folded state, the electronic device uses the relatively large initial velocity gain and the relatively small friction coefficient that correspond to the quick sliding curve rate policy, so that a scrolled range of the screen of the electronic device is relatively large, and power consumption of the electronic device is relatively large.

For example, it can be learned through measurement that, when the folded screen of the electronic device (for example, the mobile phone) is in the folded state and the quick sliding curve rate policy is used, power consumption of the electronic device is worsened by 16 mA compared with the power consumption of the electronic device used when the folded screen of the electronic device is in the folded state and the slow quick sliding curve rate policy is used. In other words, when the folded screen of the electronic device is in the folded state, and the electronic device uses the quick sliding curve rate policy, the power consumption of the electronic device is relatively large.

It can be learned that in the foregoing related technology, in a solution in which the electronic device uses the quick sliding curve rate policy, although the rate at which the electronic device processes and adjusts the response velocity and the curve of the sliding event can be relatively high, avoiding that the user feels that the electronic device responds relatively slowly, in the related technology, a scrolled display range of the electronic device is relatively large, and a display velocity of the electronic device is relatively low, or a data amount of to-be-displayed content is relatively large, causing the electronic device to display a white block or a black block at a corresponding position, causing the user to feel that the displaying by the electronic device is relatively slow, and affecting usage experience of the user. In addition, in the related technology, because the scrolled display range of the electronic device is relatively large, and the electronic device displays relatively much content, power consumption of the electronic device is caused to be relatively large. Therefore, the solution in which the electronic device uses the quick sliding curve rate policy does not well resolve the problem that the user is caused to feel that the electronic device responds slowly because the rate at which the response velocity and the curve of the sliding event are processed and adjusted by using the slow sliding curve rate policy is relatively low.

For the foregoing problem, an embodiment of this application provides a display control method, applied to an electronic device. The electronic device may include a slow sliding curve rate policy and a quick sliding curve rate policy. In a usage process of the electronic device, the electronic device may determine a usage scenario of the electronic device, to use different sliding curve rate policies based on the usage scenario of the electronic device. When the usage scenario is a scenario in which the quick sliding curve rate policy needs to be used, the electronic device may use the quick sliding curve rate policy. When the usage scenario is a scenario in which the slow sliding curve rate policy needs to be used, the electronic device may use the slow sliding curve rate policy.

When the usage scenario is the scenario in which the quick sliding curve rate policy needs to be used (for example, a screen of a folded-screen electronic device is in a folded state), the electronic device may use the quick sliding curve rate policy. Therefore, a case in which when a user performs a quick sliding operation on a screen of an electronic device such as a mobile phone, the user feels that the electronic device responds relatively slowly can be avoided, thereby improving usage experience of the user.

When the usage scenario is the scenario in which the slow sliding curve rate policy needs to be used (for example, a scenario in which a screen of a folded-screen electronic device is in an unfolded state), the electronic device may use the slow sliding curve rate policy. Therefore, when a display velocity of the electronic device is relatively low, that the electronic device displays a white block or a black block at a corresponding position can be avoided, thereby improving user experience and reducing power consumption of the electronic device.

Initial velocity gains and friction coefficients of the quick sliding curve rate policy and the slow sliding curve rate policy are different. Therefore, when the electronic device uses the quick sliding curve rate policy or the slow sliding curve rate policy, if the electronic device receives a sliding operation of the user, duration for which a page of the electronic device is displayed in a scrolling manner and a distance for which the page is slid both vary. Start time of the duration for which the page of the electronic device is displayed in the scrolling manner is time at which a finger of the user is lifted up (in other words, time at which the finger of the user leaves the screen of the electronic device) when the electronic device receives the sliding operation of the user. Stop time of the duration for which the page of the electronic device is displayed in the scrolling manner is time at which scrolling is stopped after the electronic device starts to perform displaying in the scrolling manner based on the initial velocity gain and the friction coefficient after the electronic device receives the sliding operation of the user and the finger of the user is lifted up. The distance for which the page of the electronic device is slid is a distance for which the page of the electronic device is displayed in the scrolling manner, in other words, a distance for which the page is slid, which may also be referred to as a physical distance for which the page is slid, between time at which the electronic device starts to perform displaying in the scrolling manner based on the initial velocity gain and the friction coefficient after the electronic device receives the sliding operation of the user and the finger of the user is lifted up and time at which scrolling is stopped.

When the electronic device uses the quick sliding curve rate policy, if the electronic device receives the sliding operation of the user, duration for which the page of the electronic device is displayed in the scrolling manner is first duration, and a distance for which the page of the electronic device is slid is a first distance. When the electronic device uses the quick sliding curve rate policy, if the electronic device receives the sliding operation of the user, and a target sliding processing policy is a second sliding processing policy, duration for which the page of the electronic device is displayed in the scrolling manner is second duration, and a sliding distance for which the page of the electronic device is slid is a second distance. The first duration is greater than the second duration, and the first distance is greater than the second distance.

It can be learned through measurement that when usage scenarios of the electronic device are the same (for example, the usage scenarios of the electronic device are a large-screen scenario or a small-screen scenario), and sliding parameters (namely, a sliding distance, a sliding curve, sliding time, a sliding force, and the like) of sliding operations of the user on the screen of the electronic device are the same, if the electronic device uses the quick sliding curve rate policy, the duration (namely, the first duration) for which the page of the electronic device is displayed in the scrolling manner is 300 milliseconds. When usage scenarios of the electronic device are the same (for example, the usage scenarios of the electronic device are a large-screen scenario or a small-screen scenario), and parameters (namely, a sliding distance, a sliding curve, sliding time, a sliding force, and the like) of sliding performed by the user on the screen of the electronic device are the same, if the electronic device uses the slow sliding curve rate policy, the duration (namely, the second duration) for which the page of the electronic device is displayed in the scrolling manner is 200 milliseconds. In other words, when the usage scenarios of the electronic device are the same, and the parameters of sliding performed by the user on the screen of the electronic device are the same, the duration for which the page of the electronic device is displayed in the scrolling manner when the electronic device uses a quick sliding processing policy is greater than the duration for which the page of the electronic device is displayed in the scrolling manner when the electronic device uses the quick sliding processing policy, and the distance for which the page of the electronic device is slid when the electronic device uses the quick sliding processing policy is greater than the distance for which the page of the electronic device is slid when the electronic device uses the quick sliding processing policy.

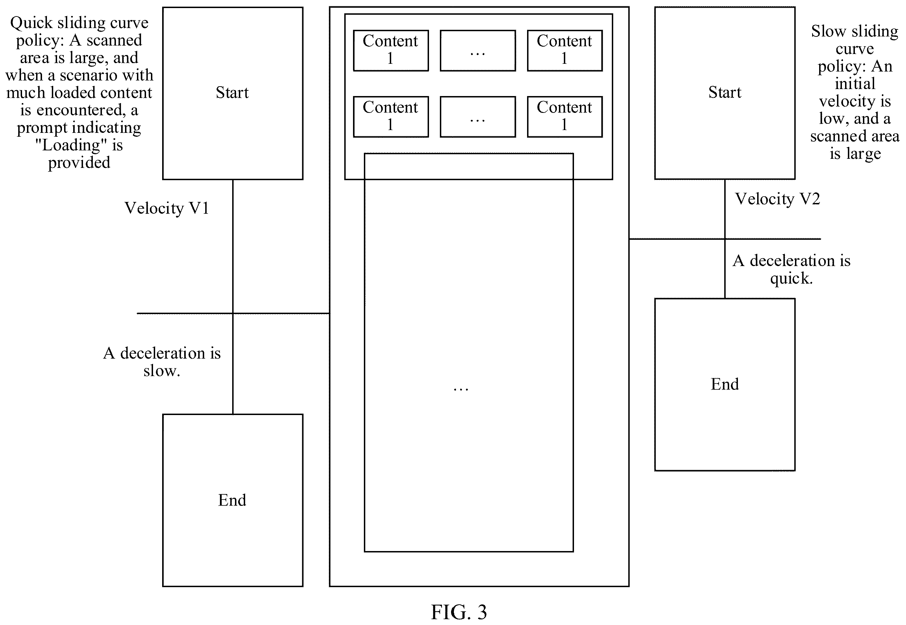

Principles of the slow sliding curve rate policy and the quick sliding curve rate policy that are included in the electronic device are schematically described below with reference to FIG. 3.

With reference to FIG. 3, an example in which usage scenarios of an electronic device are a large-screen scenario (to be specific, a screen of a folded-screen electronic device is in an unfolded state) or the usage scenarios of the electronic device are a small-screen scenario (to be specific, the screen of the folded-screen electronic device is in a folded state) is used, in other words, the usage scenarios of the electronic device are the same usage scenario. When the electronic device uses a quick sliding curve rate policy, the electronic device uses a relatively large initial velocity gain and a relatively small friction coefficient that correspond to the quick sliding curve rate policy. When a user slides on the screen of the electronic device, because the electronic device uses the relatively small friction coefficient, the initial velocity gain (namely, a velocity V1) is decelerated slowly, so that a scrolled range of the screen of the electronic device is relatively large, in other words, duration for which a page of the electronic device is displayed in a scrolling manner is relatively long, and a sliding distance for which the page of the electronic device is slid is relatively long. Because the scrolled range of the screen of the electronic device is relatively large, the electronic device relatively quickly displays content in the scrolling manner, and content that can be displayed in the scrolling manner is relatively much, in other words, an area scanned by the electronic device is relatively large. In other words, when the electronic device uses the quick sliding curve rate policy, a scrolled display velocity of the electronic device is relatively high, and an amount of content displayed by the electronic device in the scrolling manner is relatively large. Because the area scanned by the electronic device is relatively large, when a scenario with relatively much display is encountered (in other words, content to be displayed by the electronic device is relatively much), the electronic device displays a white block or a black block at a corresponding position, or displays prompt information such as a word "Loading".

However, when the electronic device uses a slow sliding curve rate policy, the electronic device uses a relatively small initial velocity gain and a relatively large friction coefficient that correspond to the slow sliding curve rate policy. When the user slides on the screen of the electronic device for the same distance based on the same angle, the same curve, and the same force by using the same sliding parameter, for example, by using the same velocity (in other words, when the electronic device uses the quick sliding curve rate policy and the electronic device uses the slow sliding curve rate policy, sliding rates of the user are the same, sliding angles are the same, sliding curves are the same, sliding forces are the same, and sliding distances are also the same), because the electronic device uses the relatively large friction coefficient, the initial velocity gain (namely, a velocity V2) may be decelerated relatively quickly, so that a scrolled range of the screen of the electronic device is relatively small, in other words, duration for which the page of the electronic device is displayed in the scrolling manner is relatively short, and a sliding distance for which the page of the electronic device is slid is relatively short. Because the scrolled range of the screen of the electronic device is relatively small, the electronic device relatively slowly displays content in the scrolling manner, and content that can be displayed in the scrolling manner is relatively little, in other words, an area scanned by the electronic device is relatively small. In other words, when the electronic device uses the slow sliding curve rate policy, a velocity of a scrolled display velocity of the electronic device is relatively small, and an amount of content displayed by the electronic device in the scrolling manner is relatively small.

It can be learned with reference to the principles of the slow sliding curve rate policy and the quick sliding curve rate policy included in the electronic device shown in FIG. 3 that the use of the slow sliding curve rate policy by the electronic device and the use of the quick sliding curve rate policy by the electronic device respectively have different advantages and disadvantages. Therefore, the slow sliding curve rate policy and the quick sliding curve rate policy are applicable to different usage scenarios.

With reference to Table 3, the following describes in detail the advantages and the disadvantages that respectively correspond to the slow sliding curve rate policy and the quick sliding curve rate policy and usage scenarios that are respectively applicable to the slow sliding curve rate policy and the quick sliding curve rate policy.

**Table 3**

| Sliding curve rate policy | Advantages | Disadvantages | Adaptation scenario |
|---|---|---|---|
| Quick sliding curve rate policy | This is applicable to a scenario in which a relatively small amount of content is displayed, for example, a text-type (for example, an address book list) scenario, which can enable the subjective smoothness feeling of the user to be better. | 1. Power consumption is relatively high. | Scenario with mainly text-type content |
| | | 2. For a shopping-type application, a food-type application, or a news-type application, content such as an image or a video is mainly displayed, and a black block or a white block easily appears, easily causing the user to subjectively feel that a page is stuck. | |
| | | 3. It is easily affected by network quality, server bandwidth, and the like, and when a scenario in which displaying and buffering are slow, for example, a scenario in which a cellular or Wi-Fi signal is poor, a 4G network scenario, or the like, is encountered, slow displaying and buffering are easily caused to appear, scrolling of the page is stopped, and the page is stuck and still, causing the user to feel that the page is slow, the signal is poor, and the like. | |
| | | 4. A scrolled velocity is excessively quick, it is not easy for the user to focus on specific content, and the content flickers through. | |
| Slow sliding curve rate policy | 1. Power consumption is low. | This is adapted to a scenario in which little content is displayed, for example, contacts or ebooks, a scrolled velocity is slow, and the smoothness feeling of the user is relatively poor. | Scenario with mainly video or image content |
| | 2. This is applicable to displaying little content, and a white block or a black block does not easily appear. | | |
| | 3. The user can see clearly and focus more easily. | | |

It can be learned with reference to Table 3 that when the electronic device uses the quick sliding curve rate policy, because the electronic device uses the relatively large initial velocity gain and the relatively small friction coefficient that correspond to the quick sliding curve rate policy, when the user uses the same velocity to slide for the same distance on the screen of the electronic device, an area scanned by the electronic device is relatively large, and relatively much content needs to be displayed, and when a scenario with relatively much display is encountered, the electronic device displays a prompt of loading, or the electronic device displays a white block or a black block at a corresponding position. Therefore, advantages of the quick sliding curve rate policy are that the policy is applicable to a scenario in which relatively little content is displayed, for example, a text-type (for example, an address book list) scenario, which can enable the subjective smoothness feeling of the user to be better. Disadvantages of the quick sliding curve rate policy include: 1. The power consumption of the electronic device is relatively high; 2. For an application (for example, a shopping-type application, a food-type application, or a news-type application) whose main display content is an image or a video, a black block or a white block easily appears, easily causing the user to subjectively feel that a page is stuck; 3. It is easily affected by network quality, server bandwidth, and the like. For example, when a scenario in which displaying and buffering are slow, for example, a scenario in which a cellular or wireless fidelity (wireless fidelity, Wi-Fi) signal is poor, a 4G network scenario, or the like, is encountered, slow displaying and buffering are easily caused to appear, scrolling of the page is stopped, and the page is stuck and still, causing the user to feel that the page is slow, the signal is poor, and the like; and 5. A velocity of scrolled display of the electronic device is excessively quick, it is not easy for the user to focus on specific content, and the content flickers through. Therefore, a scenario to which the quick sliding curve rate policy is adapted may be a scenario in which relatively little content is displayed, or a scenario in which a data amount of display content is relatively small, for example, a scenario with mainly text-type content.

It can be learned with reference to Table 3 that when the electronic device uses the slow sliding curve rate policy, because the electronic device uses the relatively small initial velocity gain and the relatively large friction coefficient that correspond to the slow sliding curve rate policy, when the user uses the same velocity to slide for the same distance on the screen of the electronic device, an area scanned by the electronic device is relatively small, and relatively little content needs to be displayed. When a sliding velocity of the user is quick, because an area scanned by the electronic device is relatively small, and relatively little content needs to be displayed, a problem that the user feels that the electronic device responds relatively slowly is caused. Therefore, advantages of the slow sliding curve rate policy include: 1. The power consumption of the electronic device is relatively low; 2. This is applicable to a scenario in which little content is displayed, and a white block or a black block does not easily appear; and 3. This can enable the user to see clearly and focus more easily. Disadvantages of the slow sliding curve rate policy include: 1. The power consumption of the electronic device is relatively high; 2. For an application (for example, a shopping-type application, a food-type application, or a news-type application) whose main display content is an image or a video, a black block or a white block easily appears, easily causing the user to subjectively feel that a page is stuck; 3. When a usage scenario of the electronic device is a scenario in which little content is displayed, for example, contacts or ebooks, a scrolled velocity is slow, and the smoothness feeling of the user is relatively poor. Therefore, a scenario to which the slow sliding curve rate policy is adapted may be a scenario in which relatively much content is displayed or a scenario in which a data amount of display content is relatively large, for example, a scenario with mainly video or image content.

The display control method provided in embodiments of this application is described below.

The display control method provided in embodiments of this application may be applied to an electronic device. In some embodiments, the electronic device may be an electronic device having a quick sliding curve rate policy and a slow sliding curve rate policy, for example, a mobile phone, a tablet computer, a handheld computer, a personal computer (personal computer, PC), a cellular phone, a personal digital assistant (personal digital assistant, PDA), or a wearable device. A specific form of the electronic device is not limited in embodiments of this application.

In some examples, when the electronic device is a mobile phone, the mobile phone may be a folded-screen mobile phone, or may be a non-folded-screen mobile phone. A specific form of the mobile phone is not limited in embodiments of this application.

It should be noted that, when the electronic device is a folded-screen mobile phone, the folded-screen mobile phone may be classified into two types. One type is with a folded screen that is folded outward (which is briefly referred to as a folded-out folded screen), and the other type is with a folded screen that is folded inward (which is briefly referred to as a folded-in folded screen). An example in which the folded-in screen is foldable into an outer screen and an inner screen is used. When the folded-in screen is in a folded state, only the outer screen displays content. When the folded-in screen is in a completely unfolded state, the inner screen displays content, and the outer screen becomes black. It may be understood that the folded screen may be folded up and down, or folded left and right. This is not limited in embodiments of this application. In embodiments of this application, an example of folded inward is used for description.

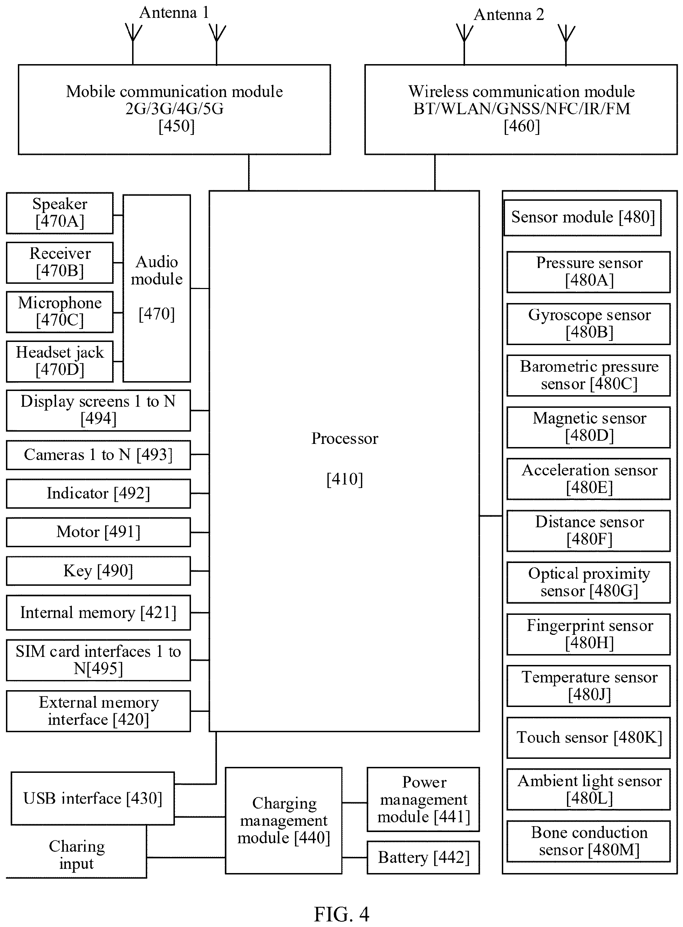

For example, the electronic device is the mobile phone. FIG. 4 is a diagram of a structure of an electronic device according to an embodiment of this application.

As shown in FIG. 4, the electronic device may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a phone receiver 470B, a microphone 470C, a headset jack 470D, a sensor module 480, a key 490, a motor 491, an indicator 492, a camera 493, a display screen 494, a subscriber identification module (subscriber identification module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It may be understood that the structure illustrated in this embodiment constitutes no specific limitation on the electronic device. In some other embodiments, the electronic device may include more or fewer components than those shown in the figure, some components may be combined, some components may be split, or a different component deployment may be used. The components shown in the figure may be implemented by using hardware, software, or a combination of software and hardware.

Certainly, it may be understood that FIG. 4 only shows an exemplary description when the electronic device is in a form of a mobile phone. If the electronic device is a tablet computer, a handheld computer, a PC, a PDA, or a wearable device (for example, a smart watch), a structure of the electronic device may include fewer structures than those shown in FIG. 4, or more structures than those shown in FIG. 4, and is not limited herein.

Methods in the following embodiments may all be implemented in the electronic device having the foregoing hardware structure.

It should be noted that, a usage scenario of the electronic device may include a plurality of scenarios, for example, a large-screen scenario (to be specific, a screen of a folded-screen electronic device is in an unfolded state), a small-screen scenario (to be specific, a screen of a folded-screen electronic device is in a folded state), a power-saving mode scenario, a non-power-saving mode scenario, a scenario in which little content is displayed (for example, a scenario in which display content is text-type content), and a scenario in which much content is displayed (for example, a scenario in which display content is image-type or video-type content).

A specific type of the usage scenario of the electronic device is not limited in this embodiment of this application. In this embodiment of this application, an example in which the usage scenario of the electronic device includes the large-screen scenario, the small-screen scenario, the power-saving mode scenario, the non-power-saving mode scenario, the scenario in which little content is displayed, and the scenario in which much content is displayed is used for description.

It may be understood that the usage scenario of the electronic device may further include other scenarios, for example, a scenario in which a network velocity is relatively good (to be specific, a scenario in which a network velocity of the electronic device is greater than or equal to a network velocity threshold), a scenario in which a network velocity is relatively poor (to be specific, a scenario in which a network velocity of the electronic device is less than a network velocity threshold), a scenario in which a percentage of a remaining battery is relatively small (to be specific, a scenario in which a percentage of remaining power of a battery of the electronic device is less than a percentage threshold), a scenario in which a percentage of a remaining battery is relatively small (to be specific, a scenario in which a percentage of remaining power of a battery of the electronic device is greater than or equal to a percentage threshold), a geo-fence scenario (to be specific, a scenario in which the electronic device is located within a range of a preset geo-fence), a non-geo-fence scenario (to be specific, a scenario in which the electronic device is not located within a range of a preset geo-fence), a low-battery extended-endurance scenario (to be specific, a scenario in which use time of a battery of the electronic device needs to be extended when remaining power of the battery is less than a power threshold), and a low-battery non-extended-endurance scenario (to be specific, a scenario in which use time of a battery of the electronic device needs to be extended when remaining power of the battery is greater than or equal to a power threshold).

When the electronic device is being used, the usage scenario of the electronic device may be determined, so that different sliding curve rate policies are used based on the usage scenario of the electronic device. Because the usage scenario of the electronic device may include a plurality of scenarios, when determining the usage scenario of the electronic device, the electronic device may determine, based on priorities of the scenarios (in other words, importance of the scenarios) and based on an order of the priorities, which scenario is the usage scenario of the electronic device.

In some examples, a priority of a scenario may be preset. For example, a priority of the large-screen scenario may be preset to be higher than a priority of the power-saving mode scenario, and the priority of the power-saving mode scenario may be preset to be higher than a priority of the scenario in which little content is displayed. In other words, when the electronic device determines the usage scenario, the electronic device first determines whether the scenario is the large-screen scenario, then determines whether the scenario is the power-saving mode scenario, and finally determines whether the scenario is the scenario in which little content is displayed.

In some other examples, the priority of the scenario may alternatively be determined based on usage information of the user for using different scenarios, for example, power consumption information, usage times information, usage duration information, and usage frequency information in different scenarios. For example, when the large-screen scenario is used for a larger quantity of times and the power-saving mode scenario is used for a smaller quantity of times, it may be determined that the priority of the large-screen scenario is higher than the priority of the power-saving mode scenario. A manner of determining the priority of the scenario is not specifically limited in this embodiment of this application.

The display control method provided in embodiments of this application is described in detail below by using an example in which the electronic device is a folded-screen electronic device (which may also be referred to as a foldable electronic device), a sliding curve rate policy of the electronic device includes a slow sliding curve rate policy and a quick sliding curve rate policy, usage scenarios of the electronic device are a large-screen scenario, a small-screen scenario, a power-saving mode scenario, a non-power-saving mode scenario, a scenario in which little content is displayed, and a scenario in which much content is displayed, and a priority of the large-screen scenario is higher than a priority of the power-saving mode scenario and the priority of the power-saving mode scenario is higher than a priority of the scenario in which little content is displayed.

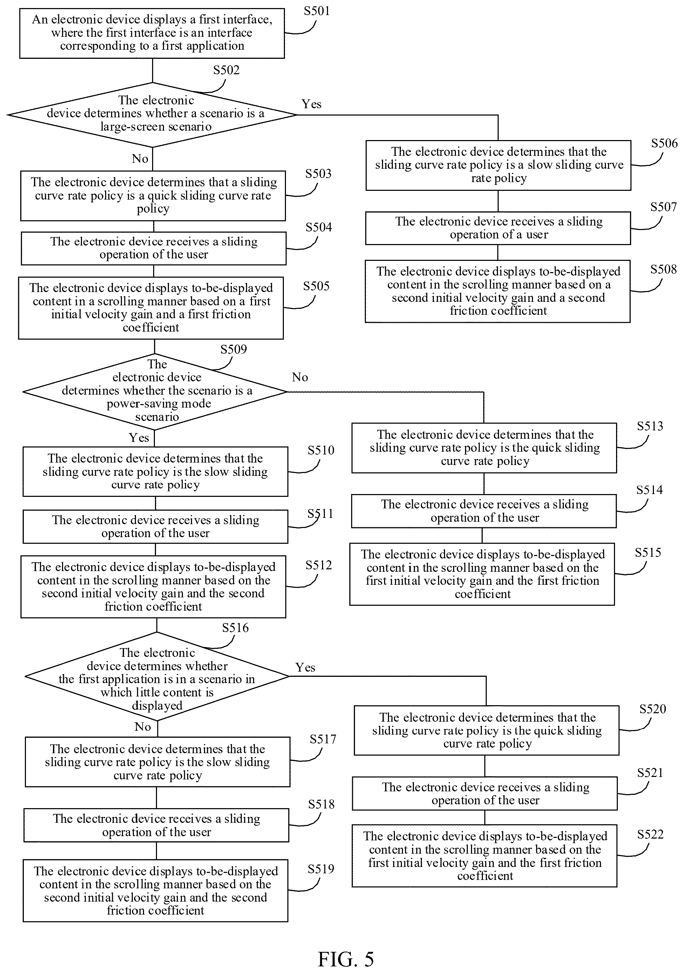

FIG. 5 is a schematic flowchart of a display control method according to an embodiment of this application. As shown in FIG. 5, the display control method may include S501 to S522 described below.

S501: An electronic device displays a first interface, where the first interface is an interface corresponding to a first application.

The electronic device in this embodiment of this application may be a folded-screen electronic device (which may also be referred to as a foldable electronic device), or may be a non-folded-screen electronic device. In this embodiment of this application, an example in which the electronic device is the folded-screen electronic device is used for description. When the electronic device is the foldable electronic device, the foldable electronic device may include a first screen body and a second screen body that are relatively disposed, and a display area of the second screen body is greater than a display area of the first screen body. When the foldable electronic device is in a folded state, the foldable electronic device may control the first screen body to display a first page. In other words, when the foldable electronic device is in the folded state, the first screen body may also be referred to as a small screen. When the foldable electronic device is in an unfolded state, the foldable electronic device may control the second screen body to display the first page, and the second screen body may also be referred to as a large screen.

A sliding curve rate policy (which may also be referred to as a sliding processing policy in this embodiment of this application) of the electronic device may include a slow sliding curve rate policy (which may also be referred to as a second sliding processing policy in this embodiment of this application) and a quick sliding curve rate policy (which may also be referred to as a first sliding processing policy in this embodiment of this application). In other words, the slow sliding curve rate policy and the quick sliding curve rate policy may be preset in the electronic device.

An initial velocity gain corresponding to the quick sliding curve rate policy is a first initial velocity gain (which may also be referred to as a first initial velocity in this embodiment of this application), and a friction coefficient corresponding to the quick sliding curve rate policy is a first friction coefficient. An initial velocity gain corresponding to the slow sliding curve rate policy is a second initial velocity gain (which may also be referred to as a second initial velocity in this embodiment of this application), and a friction coefficient corresponding to the slow sliding curve rate policy is a second friction coefficient. The first initial velocity gain is greater than the second initial velocity gain, and the first friction coefficient is less than the second friction coefficient. For example, the first initial velocity gain may be 0.8, the first friction coefficient may be 0.6, the second initial velocity gain may be 0.6, and the first friction coefficient may be 0.7.

For example, code of the slow sliding curve rate policy and the quick sliding curve rate policy that are preset in the electronic device may be shown as follows.

The code of the slow sliding curve rate policy may be:
<!-- high treg slrde model -->
<param name="high freq_smart slide model config">
<slide_param name="switch"value=" 1"/>
<slide param name="low_velocity_friction_gain"value="0.7"/>
<slide_param name="low_velocity_init_velocity_gain"value="0.6"/>
<slide param name="medium_velocity_level"value="5000.0"/>
<slide_param name="medium _velocity_friction_gain"value="0.7"/>
<slide_param name="medium _velocity_init_velocity_gain"value="0.6"/>
<slide param name-"high_velocity_level"value"15000.0"/>
<slide_param name="high_velocity_friction gain"value="0.7"/>
<slide_param name="high_velocity_init_velocity_gain"value="0.6"/>
</Param>

It can be learned with reference to the code of the slow sliding curve rate policy that, when the electronic device uses the slow sliding curve rate policy, when a sliding velocity of a user is a high velocity, the second initial velocity gain (namely, high_velocity_init_velocity_gain) is 0.6, and the second friction coefficient (namely, high_velocity_friction_gain) is 0.7. When the sliding velocity of the user is a medium velocity, the second initial velocity gain (namely, medium_velocity_init_velocity_gain) is 0.6, and the second friction coefficient (namely, medium_velocity _friction_gain) is 0.7. When the sliding velocity of the user is the high velocity, the second initial velocity gain (namely, low _velocity_init_velocity_gain) is 0.6, and the second friction coefficient (namely, low _velocity_friction_gain) is 0.7. In other words, regardless of a velocity at which the user slides on the screen of the electronic device is high or low, when the electronic device uses the slow sliding curve rate policy, the same corresponding initial velocity gain and friction coefficient are used.

Code of the quick sliding curve rate policy may be:
<!-- high treg slrde model -->
<param name="high freq_smart slide model config">
<slide_param name="switch"value="1"/>
<slide param name="low_velocity_friction_gain"value="0.6"/>
<slide_param name="low_velocity_init_velocity_gain"value="0.8"/>
<slide param name="medium _velocity_level"value="5000.0"/>
<slide_param name="medium _velocity_friction_gain"value="0.6"/>
<slide_param name="medium _velocity_init_velocity_gain"value="0.8"/>
<slide param name-"high _velocity_level"value" 15000.0"/*>*
<slide_param name="high _velocity_friction gain"value="0.6"/>
<slide_param name="high _velocity_init_velocity_gain"value="0.8"/>
</Param>

It can be learned with reference to the code of the quick sliding curve rate policy that, when the electronic device uses the quick sliding curve rate policy, when a sliding velocity of a user is a high velocity, the first initial velocity gain (namely, high_velocity_init_velocity_gain) is 0.8, and the first friction coefficient (namely, high_velocity_friction_gain) is 0.6. When the sliding velocity of the user is a medium velocity, the first initial velocity gain (namely, medium_velocity_init_velocity_gain) is 0.8, and the first friction coefficient (namely, medium_velocity _friction_gain) is 0.6. When the sliding velocity of the user is the high velocity, the first initial velocity gain (namely, low _velocity_init_velocity_gain) is 0.8, and the first friction coefficient (namely, low _velocity_friction_gain) is 0.6. In other words, regardless of a velocity at which the user slides on the screen of the electronic device is high or low, when the electronic device uses the quick sliding curve rate policy, the same corresponding initial velocity gain and friction coefficient are used.

It should be noted that, the sliding curve rate policy of the electronic device may alternatively include at least two sliding curve rate policies. Different sliding curve rate policies may correspond to different initial velocity gains and friction coefficients, in other words, different sliding curve policies may correspond to different usage scenarios of the electronic device. For example, the sliding curve rate policy of the electronic device may include three sliding curve rate policies, namely, a slow sliding curve rate policy, an intermediate sliding curve policy, and a quick sliding curve rate policy. An initial velocity gain corresponding to the intermediate sliding curve policy may be greater than an initial velocity gain corresponding to the slow sliding curve rate policy, and the initial velocity gain corresponding to the intermediate sliding curve policy is less than an initial velocity gain corresponding to the quick sliding curve rate policy. A friction coefficient corresponding to the intermediate sliding curve policy may be less than a friction coefficient corresponding to the slow sliding curve rate policy, and the friction coefficient corresponding to the intermediate sliding curve policy is greater than a friction coefficient corresponding to the quick sliding curve rate policy. The slow sliding curve rate policy may correspond to a scenario in which much content is displayed (for example, a scenario in which display content is a video), the intermediate sliding curve policy may correspond to a scenario in which relatively much content is displayed (for example, a scenario in which display content is an image), and the quick sliding curve rate policy may correspond to a scenario in which relatively little content is displayed (for example, a scenario in which display content is text).

A specific quantity of sliding curve rate policies of the electronic device is not limited in this embodiment of this application. In this embodiment of this application, an example in which the sliding curve rate policy of the electronic device includes two sliding curve rate policies, namely, the slow sliding curve rate policy and the quick sliding curve rate policy is used for description.

After the electronic device presets the slow sliding curve rate policy and the quick sliding curve rate policy, the user may open the first application included in the electronic device, so that the electronic device may display the first interface. The first interface may be an interface of the first application included in the electronic device.

In some examples, the first application may be a text-type application program. In other words, content displayed in the first application is mainly text-type content. To be specific, the first application may be an application in which relatively little content is displayed or a display data amount is relatively small. For example, the text-type application may be an address book application, a communication application, an ebook application, or the like. The first application may be a third-party application, or may be an application in a system of the electronic device. This is not limited in this embodiment of this application.

In some other examples, the first application may be an image-type application or a video-type application program. In other words, content displayed in the first application is mainly image-type or video-type content. To be specific, the first application may be an application in which relatively much content is displayed or a display data amount is relatively large. For example, the image-type application or the video-type application may be a shopping-type application, a food-type application, a news-type application, or the like.

It should be noted that, a specific type of the first application is not limited in this embodiment of this application.

S502: The electronic device determines whether a scenario is a large-screen scenario.

After the electronic device receives a sliding operation of a user, in response, the electronic device may determine whether the scenario is the large-screen scenario, in other words, the electronic device may determine whether a folded screen of the electronic device is in an unfolded state. When the folded screen of the electronic device is in the unfolded state, the electronic device may determine that a usage scenario of the electronic device is the large-screen scenario. When the folded screen of the electronic device is in a folded state, it may be determined that the usage scenario of the electronic device is a small-screen scenario.

In some examples, that the electronic device determines whether the scenario is the large-screen scenario may include: The electronic device determines, by using a sensor (for example, an unfolding sensor), whether the usage scenario of the electronic device is the large-screen scenario. To be specific, the electronic device may obtain data of a corresponding sensor, to determine, based on the data of the sensor, whether the electronic device is in the large-screen scenario. When the data of the sensor is data corresponding to the large-screen scenario, it may be determined that the usage scenario of the electronic device is the large-screen scenario. When the data of the sensor is data corresponding to the small-screen scenario, it may be determined that the usage scenario of the electronic device is the small-screen scenario.

In some other examples, that the electronic device determines whether the scenario is the large-screen scenario may include: The electronic device determines whether the usage scenario of the electronic device is the large-screen scenario based on a resolution of a main interface (for example, a resolution of a current display interface) of the electronic device. To be specific, the electronic device may obtain the resolution of the main interface of the electronic device, to determine, based on the resolution of the main interface, whether the electronic device is in the large-screen scenario. When the resolution of the main interface is a resolution corresponding to the large-screen scenario, it may be determined that the usage scenario of the electronic device is the large-screen scenario. When the resolution of the main interface is a resolution corresponding to the small-screen scenario, it may be determined that the usage scenario of the electronic device is the small-screen scenario.

In some other examples, that the electronic device determines whether the scenario is the large-screen scenario may include: The electronic device determines whether the usage scenario of the electronic device is the large-screen scenario based on sizes of L (to be specific, Left)-R (Right) four-corner coordinates of a layer. To be specific, the electronic device may obtain the sizes of the L-R four-corner coordinates of the layer of the electronic device, to determine, based on the sizes of the L-R four-corner coordinates of the layer, whether the electronic device is in the large-screen scenario. When the sizes of the L-R four-corner coordinates of the layer are sizes of L-R four-corner coordinates corresponding to the large-screen scenario, it may be determined that the usage scenario of the electronic device is the large-screen scenario. When the sizes of the L-R four-corner coordinates of the layer are sizes of L-R four-corner coordinates corresponding to the small-screen scenario, it may be determined that the usage scenario of the electronic device is the small-screen scenario. The L-R four-corner coordinates of the layer are usually four boundary coordinates of the left, right, upper, and lower of the layer, and the L-R four-corner coordinates may indicate a position and a size of the layer on a screen.

It should be noted that, a specific manner of determining, by the electronic device, whether the scenario is the large-screen scenario is not limited in this embodiment of this application, provided that whether the electronic device is in the large-screen scenario can be determined.

When it is determined that the electronic device is not in the large-screen scenario (in other words, the electronic device uses the small-screen scenario), it may be determined that a sliding curve rate policy of the electronic device is a quick sliding curve rate policy, in other words, the electronic device may continue to perform S503 to S505 described below. When it is determined that the electronic device is in the large-screen scenario, it may be determined that the sliding curve rate policy of the electronic device is a slow sliding curve rate policy, in other words, the electronic device may continue to perform S506 to S508 described below.

S503: The electronic device determines that the sliding curve rate policy is the quick sliding curve rate policy.

When the electronic device determines that the scenario is not the large-screen scenario (in other words, the scenario is the small-screen scenario), to be specific, the folded screen of the electronic device is in the folded state, the electronic device may determine that the sliding curve rate policy is the quick sliding curve rate policy, in other words, determine that a target sliding processing policy is a first sliding processing policy.

S504: The electronic device receives a sliding operation of the user.

After the electronic device determines that the sliding curve rate policy is the quick sliding curve rate policy, the electronic device may receive the sliding operation (which may also be referred to as a first sliding operation in this embodiment of this application) of the user. In other words, when the user needs to view content not displayed in the first interface (in other words, to-be-displayed content of the first application), the user may perform the sliding operation on the first interface, so that the electronic device may display the to-be-displayed content in a scrolling manner.

It should be noted that, that the electronic device determines whether the electronic device is in the large-screen scenario may be that after the electronic device receives the sliding operation of the user, the electronic device determines whether the electronic device is in the large-screen scenario, to determine different sliding processing policies depending on whether the electronic device is in the large-screen scenario. The electronic device may alternatively first determine whether the electronic device is in the large-screen scenario, to determine a corresponding sliding curve rate policy. Then, when the electronic device receives the sliding operation of the user, the electronic device may determine different sliding processing policies depending on whether the electronic device uses the large-screen scenario or the small-screen scenario. A sequence between determining, by the electronic device, whether the electronic device is in the large-screen scenario and receiving, by the electronic device, the sliding operation of the user is not limited in this embodiment of this application. In this embodiment of this application, an example in which the electronic device receives the sliding operation of the user after the electronic device determines whether the electronic device is in the large-screen scenario (in other words, determines a corresponding sliding curve rate policy) is used for description.

S505: The electronic device displays to-be-displayed content in a scrolling manner based on a first initial velocity gain and a first friction coefficient.

When the electronic device receives the sliding operation of the user, in response, the electronic device may display the to-be-displayed content in the scrolling manner based on the first initial velocity gain and the first friction coefficient. The to-be-displayed content may include content newly loaded in the first interface after the first interface responds to the sliding operation. In other words, when the electronic device displays the to-be-displayed content in the scrolling manner based on the first initial velocity gain and the first friction coefficient, the interface of the electronic device may include the newly loaded content after responding to the sliding operation, and the interface of the electronic device may further include some content in originally loaded content in the first interface.

When the electronic device determines that the sliding curve rate policy is the quick sliding curve rate policy, the electronic device may display the to-be-displayed content in the scrolling manner based on the quick sliding curve rate policy. In other words, the electronic device may display, in the scrolling manner based on a first initial velocity gain and a first friction coefficient that correspond to the quick sliding curve rate policy, content not displayed in the first interface.

Because the first initial velocity gain is relatively large, and the first friction coefficient is relatively small, when the electronic device displays, in the scrolling manner based on the first initial velocity gain and the first friction coefficient that correspond to the quick sliding curve rate policy, the content not displayed in the first interface, the electronic device may display relatively much to-be-displayed content in the scrolling manner, which can enable the subjective smoothness feeling of the user to be better.

It should be noted that, after the electronic device displays the to-be-displayed content in the scrolling manner based on the first initial velocity gain and the first friction coefficient, the electronic device may continue to determine whether the scenario is a power-saving mode scenario, in other words, the electronic device may continue to perform S509 described below. After the electronic device displays the to-be-displayed content in the scrolling manner based on the first initial velocity gain and the first friction coefficient, the electronic device may further continue to determine whether the scenario is the large-screen scenario, in other words, the electronic device may continue to perform S502 described above. When the electronic device determines that the scenario is the large-screen scenario, the electronic device may determine that the sliding curve rate policy is the slow sliding curve rate policy, in other words, the electronic device may continue to perform S506 to S508 described below. In this embodiment of this application, an example in which after the electronic device displays the to-be-displayed content in the scrolling manner based on the first initial velocity gain and the first friction coefficient, the electronic device may continue to determine whether the scenario is the power-saving mode scenario is used for description.

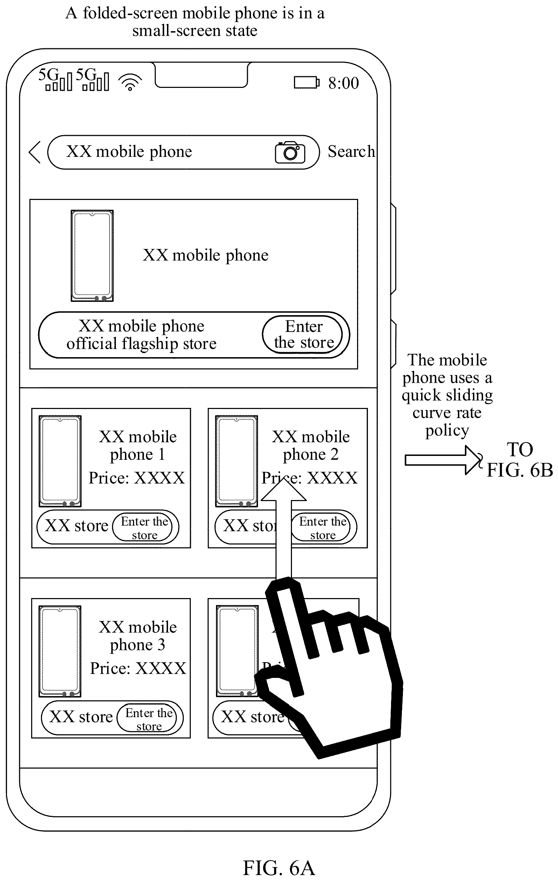

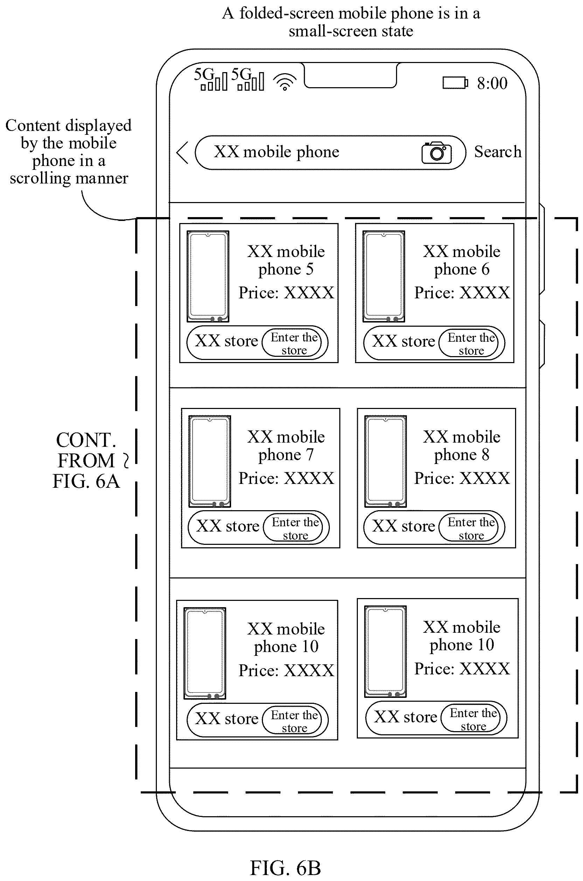

For example, an example in which the electronic device is a folded-screen mobile phone is used. After the user opens a shopping application on the folded-screen mobile phone, with reference to FIG. 6A, the folded-screen mobile phone may display an interface (namely, the first interface) corresponding to the shopping application, where the first interface may include related information of an XX mobile phone model 1, related information of an XX mobile phone model 2, related information of an XX mobile phone model 3, and related information of an XX mobile phone model 4. When the electronic device receives the sliding operation of the user on the first interface, for example, sliding up, in response, the mobile phone may determine whether a usage scenario of the mobile phone is the large-screen scenario, in other words, the mobile phone may determine whether a folded screen of the mobile phone is in an unfolded state. When the usage scenario of the mobile phone is the small-screen scenario (in other words, the folded screen of the mobile phone is in a folded state), the mobile phone may determine that the sliding curve rate policy is the quick sliding curve rate policy, and then the mobile phone may display the to-be-displayed content in the rolling manner based on the first initial velocity gain and the first friction coefficient that correspond to the quick sliding curve rate policy. Because the first initial velocity gain corresponding to the quick sliding curve rate policy is relatively large, and the first friction coefficient is relatively small, a velocity at which the mobile phone displays the to-be-displayed content in the scrolling manner is relatively high. In addition, as shown in FIG. 6B, the mobile phone may display to-be-displayed content, and the to-be-displayed content may include related information of an XX mobile phone model 5, related information of an XX mobile phone model 6, related information of an XX mobile phone model 7, related information of an XX mobile phone model 8, and related information of an XX mobile phone model 9. Because the mobile phone uses the quick sliding curve rate policy, when the mobile phone displays the to-be-displayed content in the scrolling manner, duration for which the mobile phone displays the to-be-displayed content in the scrolling manner is shorter than duration for which the mobile phone displays the to-be-displayed content in the scrolling manner when the mobile phone uses a slow sliding processing policy in the small-screen scenario of the mobile phone. In addition, a distance for which a page of the mobile phone is slid is shorter than a distance for which the page of the mobile phone is slid when the mobile phone uses a quick sliding processing policy in the small-screen scenario of the mobile phone.

S506: The electronic device determines that the sliding curve rate policy is the slow sliding curve rate policy.

When the electronic device determines that the scenario is the large-screen scenario, to be specific, the folded screen of the electronic device is in the unfolded state, the electronic device may determine that the sliding curve rate policy is the slow sliding curve rate policy, in other words, determine that the target sliding processing policy is the second sliding processing policy.

S507: The electronic device receives a sliding operation of the user.

The electronic device may receive the sliding operation of the user after the electronic device determines that the sliding curve rate policy is the slow sliding curve rate policy.

S508: The electronic device displays to-be-displayed content in a scrolling manner based on a second initial velocity gain and a second friction coefficient.

When the electronic device receives the sliding operation of the user, in response, the electronic device may display the to-be-displayed content in the scrolling manner based on the second initial velocity gain and the second friction coefficient. In other words, when the electronic device determines that the sliding curve rate policy is the slow sliding curve rate policy, the electronic device may display the to-be-displayed content in the scrolling manner based on the slow sliding curve rate policy. In other words, the electronic device may display, in the scrolling manner based on a second initial velocity gain and a second friction coefficient that correspond to the slow sliding curve rate policy, content not displayed in the first interface.

Because the second initial velocity gain is relatively small, and the first friction coefficient is relatively large, when the electronic device displays, in the scrolling manner based on the second initial velocity gain and the second friction coefficient that correspond to the slow sliding curve rate policy, content not displayed in the first interface, the electronic device may display relatively little to-be-displayed content in the scrolling manner, so that a white block or a black block does not appear in the display interface of the electronic device, thereby not affecting usage experience of the user. In addition, because the electronic device displays the relatively little to-be-displayed content in the scrolling manner, the user can see clearly and focus more easily, and power consumption of the electronic device is relatively low.

It should be noted that, after the electronic device displays the to-be-displayed content in the scrolling manner based on the second initial velocity gain and the second friction coefficient, the electronic device may further continue to determine whether the scenario is the power-saving mode scenario, in other words, the electronic device may further continue to perform S509 described below. After the electronic device displays the to-be-displayed content in the scrolling manner based on the second initial velocity gain and the second friction coefficient, the electronic device may further continue to determine whether the scenario is the large-screen scenario, in other words, the electronic device may continue to perform S502 described above. When the electronic device determines that the scenario is the small-screen scenario, the electronic device may determine that the sliding curve rate policy is the quick sliding curve rate policy, in other words, the electronic device may continue to perform S503 to S505 described above.

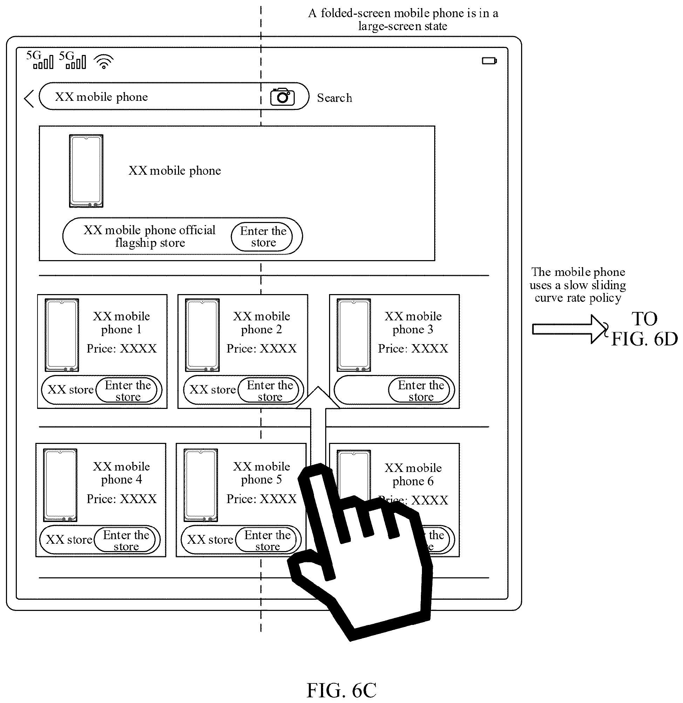

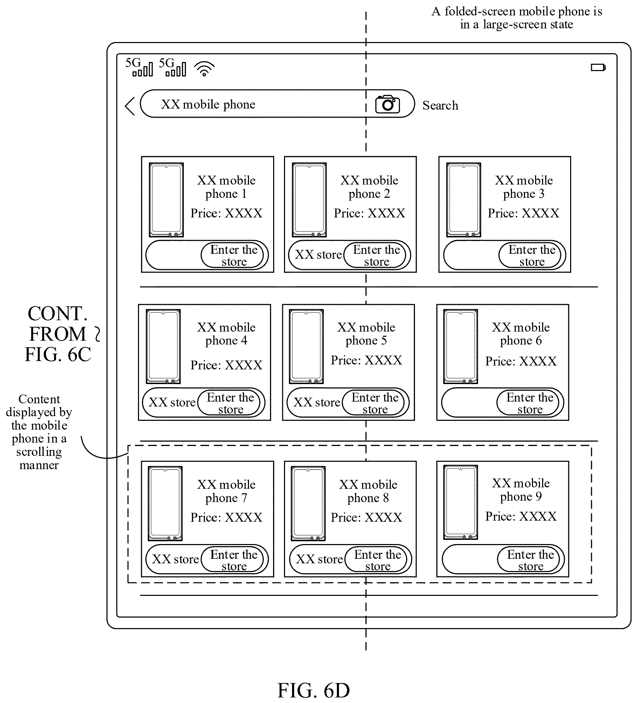

For example, an example in which the electronic device is the folded-screen mobile phone is still used. After the user opens a shopping application on the folded-screen mobile phone, with reference to FIG. 6C, the folded-screen mobile phone may display an interface (namely, the first interface) corresponding to the shopping application, where the first interface may include related information of an XX mobile phone model 1, related information of an XX mobile phone model 2, related information of an XX mobile phone model 3, related information of an XX mobile phone model 4, related information of an XX mobile phone model 5, and related information of an XX mobile phone model 6. When the electronic device receives the sliding operation of the user on the first interface, for example, sliding up, in response, the mobile phone may determine whether a usage scenario of the mobile phone is the large-screen scenario, in other words, the mobile phone may determine whether a folded screen of the mobile phone is in an unfolded state. When the usage scenario of the mobile phone is the large-screen scenario (in other words, the folded screen of the mobile phone is in the unfolded state), the mobile phone may determine that the sliding curve rate policy is the slow sliding curve rate policy, and then the mobile phone may display the to-be-displayed content in the scrolling manner based on the second initial velocity gain and the second friction coefficient that correspond to the slow sliding curve rate policy. Because the second initial velocity gain corresponding to the slow sliding curve rate policy is relatively small, and the second friction coefficient is relatively large, a velocity at which the mobile phone displays the to-be-displayed content in the scrolling manner is relatively low. In addition, as shown in FIG. 6D, the mobile phone may display to-be-displayed content. The to-be-displayed content may include related information of an XX mobile phone model 1, related information of an XX mobile phone model 2, related information of an XX mobile phone model 3, related information of an XX mobile phone model 4, related information of an XX mobile phone model 5, and related information of an XX mobile phone model 6. The to-be-displayed content may further include content displayed in the scrolling manner, in other words, related information of an XX mobile phone model 7, related information of an XX mobile phone model 8, and related information of an XX mobile phone model 9. Because the mobile phone uses the slow sliding curve rate policy, when the mobile phone displays the to-be-displayed content in the scrolling manner, duration for which the mobile phone displays the to-be-displayed content in the scrolling manner is longer than duration for which the mobile phone displays the to-be-displayed content in the scrolling manner when the mobile phone uses the slow sliding processing policy in the large-screen scenario of the mobile phone. In addition, a distance for which a page of the mobile phone is slid is longer than a distance for which the page of the mobile phone is slid when the mobile phone uses the slow sliding processing policy in the large-screen scenario of the mobile phone.

S509: The electronic device determines whether the scenario is the power-saving mode scenario.

When the electronic device displays the to-be-displayed content in the scrolling manner based on the first initial velocity gain and the first friction coefficient, the electronic device displays the to-be-displayed content in the scrolling manner based on the first initial velocity gain and the first friction coefficient that correspond to the quick sliding curve rate policy. Then, the electronic device may continue to determine whether the scenario is the power-saving mode scenario, so that when the electronic device is the power-saving mode scenario, the quick sliding curve rate policy may be adjusted to the slow sliding curve rate policy, thereby reducing power consumption of the electronic device and saving power.

In some examples, that the electronic device determines whether the scenario is the power-saving mode scenario may include: The electronic device determines, based on an enabled/disabled state of a power saving mode, whether the usage scenario of the electronic device is the power-saving mode scenario. To be specific, the electronic device may obtain the enabled/disabled state of the power saving mode, to determine, based on the enabled/disabled state of the power saving mode, whether the electronic device is in the power-saving mode scenario. When the enabled/disabled state of the power saving mode is enabled, it may be determined that the usage scenario of the electronic device is the power-saving mode scenario. When the enabled/disabled state of the power saving mode is disabled, it may be determined that the usage scenario of the electronic device is a non-power-saving mode (in other words, a non-power-saving mode scenario, which may also be referred to as a heat generation mode scenario).

It should be noted that, a specific manner of determining, by the electronic device, whether the scenario is the power-saving mode scenario is not limited in this embodiment of this application, provided that whether the electronic device is in the power-saving mode scenario can be determined.

When it is determined that the electronic device is in the power-saving mode scenario, it may be determined that the sliding curve rate policy of the electronic device is the slow sliding curve rate policy, in other words, the electronic device may continue to perform S510 to S512 described below. When it is determined that the electronic device is not in the power-saving mode scenario (in other words, in the non-power-saving mode scenario, which may also be referred to as the heat generation mode scenario), it may be determined that the sliding curve rate policy of the electronic device is the quick sliding curve rate policy, in other words, the electronic device may continue to perform S513 to S515 described below.

S510: The electronic device determines that the sliding curve rate policy is the slow sliding curve rate policy.

When the electronic device determines that the scenario is the power-saving mode scenario, the electronic device may determine that the sliding curve rate policy is the slow sliding curve rate policy, in other words, adjust the target sliding processing policy to the second sliding processing policy.

S511: The electronic device receives a sliding operation of the user.

After the electronic device determines that the sliding curve rate policy is the slow sliding curve rate policy, the electronic device may receive the sliding operation (which may also be referred to as a second sliding operation in this embodiment of this application) of the user. A sliding parameter of the second sliding operation of the user is the same as that of the first sliding operation of the user. In other words, when the user performs the second sliding operation, a sliding distance, a sliding curve, sliding time, a sliding force, and the like are all the same as those of the first sliding operation.

It should be noted that, that the electronic device determines whether the electronic device is in the power-saving mode scenario may be that after the electronic device receives the sliding operation of the user, the electronic device determines whether the electronic device is in the power-saving mode scenario, to determine different sliding processing policies depending on whether the electronic device is in the power-saving mode scenario. The electronic device may alternatively first determine whether the electronic device is in the power-saving mode scenario, to determine a corresponding sliding curve rate policy. Then, when the electronic device receives the sliding operation of the user, the electronic device may determine different sliding processing policies depending on whether the electronic device is in the power-saving mode scenario. A sequence between determining, by the electronic device, whether the electronic device is in the power-saving mode scenario and receiving, by the electronic device, the sliding operation of the user is not limited in this embodiment of this application. In this embodiment of this application, an example in which the electronic device receives the sliding operation of the user after the electronic device determines whether the electronic device is in the power-saving mode scenario (in other words, determines a corresponding sliding curve rate policy) is used for description.

S512: The electronic device displays to-be-displayed content in a scrolling manner based on the second initial velocity gain and the second friction coefficient.

When the electronic device receives the sliding operation of the user, in response, the electronic device may display the to-be-displayed content in the scrolling manner based on the second initial velocity gain and the second friction coefficient. In other words, the electronic device may display a third interface, where the third interface may include to-be-displayed content corresponding to the second sliding operation. In other words, when the electronic device determines that the sliding curve rate policy is the slow sliding curve rate policy, the electronic device may display the to-be-displayed content in the scrolling manner based on the slow sliding curve rate policy. In other words, the electronic device may display, in the scrolling manner based on a second initial velocity gain and a second friction coefficient that correspond to the slow sliding curve rate policy, content not displayed in the first interface.

Because the second initial velocity gain is relatively small, and the first friction coefficient is relatively large, when the electronic device displays, in the scrolling manner based on the second initial velocity gain and the second friction coefficient that correspond to the slow sliding curve rate policy, content not displayed in the first interface, the electronic device may display relatively little to-be-displayed content in the scrolling manner, so that power consumption of the electronic device is reduced, thereby saving power.

It should be noted that, after the electronic device displays the to-be-displayed content in the scrolling manner based on the second initial velocity gain and the second friction coefficient, the electronic device may further continue to determine whether the first application is in the scenario in which little content is displayed, in other words, the electronic device may continue to perform S516 described below. After the electronic device displays the to-be-displayed content in the scrolling manner based on the second initial velocity gain and the second friction coefficient, the electronic device may further continue to determine whether the scenario is the large-screen scenario, in other words, the electronic device may continue to perform S502 described above. When the electronic device determines that the scenario is the small-screen scenario, the electronic device may determine that the sliding curve rate policy is the quick sliding curve rate policy, in other words, the electronic device may continue to perform S503 to S505 described below. After the electronic device displays the to-be-displayed content in the scrolling manner based on the second initial velocity gain and the second friction coefficient, the electronic device may further continue to determine whether the scenario is the power-saving mode scenario, in other words, the electronic device may further continue to perform S509 described above. When the electronic device determines that the scenario is the non-power-saving mode scenario, the electronic device may determine that the sliding curve rate policy is the quick sliding curve rate policy, in other words, the electronic device may continue to perform S513 to S515 described below.

In this embodiment of this application, an example in which after the electronic device displays the to-be-displayed content in the scrolling manner based on the second initial velocity gain and the second friction coefficient, the electronic device may further continue to determine whether the first application is in the scenario in which little content is displayed, in other words, the electronic device may continue to perform S516 described below is used for description.

S513: The electronic device determines that the sliding curve rate policy is the quick sliding curve rate policy.

When the electronic device determines that the scenario is the non-power-saving mode scenario, the electronic device may determine that the sliding curve rate policy is the quick sliding curve rate policy (namely, the first sliding processing policy).

S514: The electronic device receives a sliding operation of the user.

The electronic device may receive the sliding operation of the user after the electronic device determines that the sliding curve rate policy is the quick sliding curve rate policy.

S515: The electronic device displays to-be-displayed content in a scrolling manner based on the first initial velocity gain and the first friction coefficient.

When the electronic device receives the sliding operation of the user, in response, the electronic device may display the to-be-displayed content in the scrolling manner based on the first initial velocity gain and the first friction coefficient. In other words, when the electronic device determines that the sliding curve rate policy is the quick sliding curve rate policy, the electronic device may display the to-be-displayed content in the scrolling manner based on the quick sliding curve rate policy. In other words, the electronic device may display, in the scrolling manner based on a first initial velocity gain and a first friction coefficient that correspond to the quick sliding curve rate policy, content not displayed in the first interface.

Because the first initial velocity gain is relatively large, and the first friction coefficient is relatively small, when the electronic device displays, in the scrolling manner based on the first initial velocity gain and the first friction coefficient that correspond to the quick sliding curve rate policy, the content not displayed in the first interface, the electronic device may display relatively much to-be-displayed content in the scrolling manner, which can enable the subjective smoothness feeling of the user to be better.

It should be noted that, after the electronic device displays the to-be-displayed content in the scrolling manner based on the first initial velocity gain and the first friction coefficient, the electronic device may further continue to determine whether the first application is in the scenario in which little content is displayed, in other words, the electronic device may continue to perform S516 described below. After the electronic device displays the to-be-displayed content in the scrolling manner based on the first initial velocity gain and the first friction coefficient, the electronic device may further continue to determine whether the scenario is the large-screen scenario, in other words, the electronic device may continue to perform S502 described above. When the electronic device determines that the scenario is the large-screen scenario, the electronic device may determine that the sliding curve rate policy is the slow sliding curve rate policy, in other words, the electronic device may continue to perform S506 to S508 described above. After the electronic device displays the to-be-displayed content in the scrolling manner based on the first initial velocity gain and the first friction coefficient, the electronic device may further continue to determine whether the scenario is the power-saving mode scenario, in other words, the electronic device may continue to perform S509 described above. When the electronic device determines that the scenario is the power-saving mode scenario, the electronic device may determine that the sliding curve rate policy is the slow sliding curve rate policy, in other words, the electronic device may continue to perform S510 to S512 described below.

In this embodiment of this application, an example in which after the electronic device displays the to-be-displayed content in the scrolling manner based on the second initial velocity gain and the second friction coefficient, the electronic device may further continue to determine whether the first application is in the scenario in which little content is displayed, in other words, the electronic device may continue to perform S516 described below is used for description.

S516: The electronic device determines whether the first application is in the scenario in which little content is displayed.

When the electronic device determines that the scenario is the power-saving mode scenario, the electronic device displays the to-be-displayed content in the scrolling manner based on the second initial velocity gain and the first friction coefficient that correspond to the slow sliding curve rate policy. Then, the electronic device may continue to determine whether the first application is in the scenario in which little content is displayed, so that when the first application is not in the scenario in which little content is displayed, the slow sliding curve rate policy may be adjusted to the quick sliding curve rate policy, so that the electronic device can display relatively much to-be-displayed content in the scrolling manner, which can enable the subjective smoothness feeling of the user to be better.

The scenario in which little content is displayed (which may also be referred to as a text scenario in this embodiment of this application) is a scenario in which a data amount of display content is less than a data amount threshold. For example, in a scenario in which the display content is text-type content, it may be determined that the first application is in the scenario in which little content is displayed. A scenario in which much content is displayed (which may also be referred to as a non-text scenario in this embodiment of this application) is a scenario in which a data amount of display content is greater than or equal to a data amount threshold. For example, in a scenario in which display content is image-type content or video-type content, it may be determined that the first application is in the scenario in which much content is displayed. A specific value of the data amount threshold may be set based on an actual case. This is not limited in this embodiment of this application.

It should be noted that, the data amount of display content is an amount or a size of data of content to be displayed by the electronic device. In other words, the data amount of display content may represent a total amount of data of the display content or a size of a resource occupied in the electronic device. A unit of the data amount of the display content may be a bit, a byte, or another larger unit. When the display content is the text-type content, the data amount of display content is an amount or a size of the text-type content, in other words, a size of a resource occupied by the text-type content in the electronic device. When the display content is the image-type content or the video-type content, the data amount of the display content is an amount or a size of the image-type content or the video-type content, in other words, a size of a resource occupied by the image-type content or the video-type content in the electronic device.

In some examples, that the electronic device determines whether the first application is in the scenario in which little content is displayed may be that the electronic device determines, based on an identifier of the first application (for example, a package name of the first application) and a whitelist of little display content, whether the first application is in the scenario in which little content is displayed. The whitelist of little display content may include an identifier of at least one application in which little content is displayed. The application in which little content is displayed may be an address book application, a communication application, an ebook application, or the like.

In other words, the electronic device may first obtain the identifier of the first application, for example, obtain a package name of a foreground application (namely, the first application) by using an activity manager service (activity manager service, AMS) in an application framework (framework) layer of the electronic device. After the identifier of the first application is obtained, it may be determined whether the whitelist of little display content includes the identifier of the first application. When the whitelist of little display content includes the identifier of the first application, it may be determined that the first application is in the scenario in which little content is displayed. When the whitelist of little display content does not include the identifier of the first application, it may be determined that the first application is not the scenario in which little content is displayed, in other words, the first application is in the scenario in which much content is displayed.

It should be noted that, the whitelist of little display content may be a whitelist that is of little display content and that is prestored in the electronic device. In a process of using the electronic device, the electronic device may alternatively update an identifier of a whitelist application of little display content in the whitelist of little display content. For example, when the electronic device receives an operation performed by the user on adding an application to the whitelist of little display content, in response, the electronic device may add an identifier of the application to the whitelist of little display content.

In some other examples, that the electronic device determines whether the first application is in the scenario in which little content is displayed may alternatively be that the electronic device obtains an activity (namely, an activity) corresponding to the first application by using a registration system interface, and when the activity corresponding to the first application is little display content, may determine that the first application is in the scenario in which little content is displayed. In a case of the activity corresponding to the first application, it may be determined that the first application is not the scenario in which little content is displayed, in other words, the first application is in the scenario in which much content is displayed.

In some other examples, that the electronic device determines whether the first application is in the scenario in which little content is displayed may alternatively be that the electronic device identifies, by using a video decoder in the electronic device, whether the first application is in the scenario in which little content is displayed. The video decoder may be configured to decode compressed video data into an original video signal that may be played or processed, to be specific, restore compressed and encoded video data, so that the compressed and encoded video data can be played, edited, or transmitted on the electronic device.

In other words, the electronic device may determine whether the video decoder in the electronic device needs to decode the compressed video data into the original video signal that may be played or processed. When it is determined that the video decoder in the electronic device does not need to decode the compressed video data into the original video signal that may be played or processed, it may be determined that the first application is in the scenario in which little content is displayed. When it is determined that the video decoder in the electronic device needs to decode the compressed video data into the original video signal that may be played or processed, it may be determined that the first application is not the scenario in which little content is displayed, in other words, the first application is in the scenario in which much content is displayed.

In some other examples, that the electronic device determines whether the first application is in the scenario in which little content is displayed may alternatively be that the electronic device determines, by using a current load status of the first application, whether the first application is in the scenario in which little content is displayed. Load of an application refers to workload or task load undertaken by the application when the application runs, and usually represents a need degree of the application for a computing resource, a storage resource, a network bandwidth, and the like.

In other words, the electronic device may first obtain current load of the first application, and determine whether the current load of the first application is less than a load threshold. When the current load of the first application is relatively small (to be specific, the current load of the first application is less than the load threshold), it may be determined that the first application is in the scenario in which little content is displayed. When the current load of the first application is relatively large (to be specific, the current load of the first application is greater than or equal to the load threshold), it may be determined that the first application is not the scenario in which little content is displayed, in other words, the first application is in the scenario in which much content is displayed. The load threshold may be set based on an actual case. This is not limited in this embodiment of this application.

In some other examples, that the electronic device determines whether the first application is in the scenario in which little content is displayed may alternatively be that the electronic device determines, based on real-time traffic of the electronic device, whether the first application is in the scenario in which little content is displayed. Real-time traffic of the electronic device refers to a network data transmission rate currently used by the electronic device, and may represent a velocity at which the electronic device sends and receives data through a network within a specific time period.

In other words, the electronic device may first obtain the real-time traffic of the electronic device, and determine whether the real-time traffic of the electronic device is less than a traffic threshold. When the real-time traffic of the electronic device is less than the traffic threshold, it may be determined that the first application is in the scenario in which little content is displayed. When the real-time traffic of the electronic device is greater than or equal to the traffic threshold, it may be determined that the first application is not in the scenario in which little content is displayed, in other words, the first application is in the scenario in which much content is displayed. The traffic threshold may be set based on an actual case. This is not limited in this embodiment of this application.

In some other examples, that the electronic device determines whether the first application is in the scenario in which little content is displayed may alternatively be that the electronic device determines, based on a current page frame rate of the electronic device, whether the first application is in the scenario in which little content is displayed. The current page frame rate is a quantity of times that the electronic device displays an image per second.

In other words, the electronic device may first obtain the current page frame rate of the electronic device, and determine whether the current page frame rate of the electronic device is less than a frame rate threshold. When the current page frame rate of the electronic device is less than the frame rate threshold, it may be determined that the first application is in the scenario in which little content is displayed. When the current page frame rate of the electronic device is greater than or equal to the frame rate threshold, it may be determined that the first application is not the scenario in which little content is displayed, in other words, the first application is in the scenario in which much content is displayed. The frame rate threshold may be set based on an actual case. This is not limited in this embodiment of this application.

In some other examples, that the electronic device determines whether the first application is in the scenario in which little content is displayed may alternatively be that the electronic device determines, based on a view (namely, View) tree structure node of the electronic device, whether the first application is in the scenario in which little content is displayed.

The view tree structure node is a node of an element in an application interface, represents a visual component or element, and may be a basis for constructing a user interface such as text, an image, a button, or an input box. A view tree structure is a manner of organizing and representing an interface by using a tree structure. Each node represents a visual element, and includes related information such as an attribute, a style, and a position thereof. Nodes are connected to each other by using a parent-child relationship, to form a hierarchical structure. In other words, the text, the image, the video, or the like displayed in the application interface may be determined by using the view tree structure node.

In other words, the electronic device may first traverse the nodes of the view tree structure of the electronic device, to determine whether the text, the image, the video, or the like is displayed in the application interface. When it is determined that the text is displayed in the application interface, it may be determined that the first application is in the scenario in which little content is displayed. When it is determined that the image or the video is displayed in the application interface, it may be determined that the first application is not the scenario in which little content is displayed, in other words, the first application is in the scenario in which much content is displayed.

In some other examples, that the electronic device determines whether the first application is in the scenario in which little content is displayed may include: The electronic device determines a type of content displayed in the first application (in other words, to-be-displayed content of the first application). The type of the content displayed in the first application may include a text type, an image type, a video type, or the like. When it is determined that the type of the content displayed in the first application is the text type, it may be determined that when little content is displayed in the first application, and when it is determined that the type of the content displayed in the first application is the image type or the video type, it may be determined that the first application is not in the scenario in which little content is displayed, in other words, the first application is in the scenario in which much content is displayed.

It should be noted that, when it is determined that the type of the content displayed in the first application includes at least two of the text type, the image type, or the video type, data amounts of content corresponding to the text type and content corresponding to the image type or the video type may be determined. When the data amount of the content corresponding to the text type is greater than or equal to the data amount of content corresponding to the image type or the video type, it may be determined that the first application is in the scenario in which little content is displayed. In other words, when the content corresponding to the text type is more and the content corresponding to the image type or the video type is less in the content displayed in the first application, in other words, when the content displayed in the first application is mainly the content corresponding to the text type, it may be determined that the first application is in the scenario in which little content is displayed.

When the data amount of the content corresponding to the text type is less than the data amount of the content corresponding to the image type or the video type, it may be determined that the first application is not the scenario in which little content is displayed, in other words, the first application is in the scenario in which much content is displayed. In other words, when the content corresponding to the text type is less and the content corresponding to the image type or the video type is more in the content displayed in the first application, in other words, when the content displayed in the first application is mainly the content in the image type or the video type, it may be determined that the first application is in the scenario in which much content is displayed.

In other words, when the electronic device determines whether the first application is in the scenario in which little content is displayed, the electronic device may first determine the type of the content displayed in the first application. When the type of the content displayed in the first application includes at least two types, for example, the type of the content displayed in the first application includes the text type and the image type, the electronic device may continue to determine the data amount of the content corresponding to the text type in the content displayed in the first application and the data amount of the content corresponding to the image type in the content displayed in the first application. When the data amount of the content corresponding to the text type is greater than or equal to the data amount of the content corresponding to the image type, it may be determined that the first application is in the scenario in which little content is displayed. When the data amount of the content corresponding to the text type is less than the data amount of the content corresponding to the image type, it may be determined that the first application is in the scenario in which much content is displayed.

It should be noted that, a specific manner of determining, by the electronic device, whether the first application is in the scenario in which little content is displayed is not limited in this embodiment of this application, provided that whether the first application is in the scenario in which little content is displayed can be determined.

When it is determined that the first application of the electronic device is not the scenario in which little content is displayed (in other words, is the scenario in which much content is displayed), it may be determined that the sliding curve rate policy of the electronic device is the quick sliding curve rate policy, in other words, the electronic device may continue to perform S517 to S519 described below. When it is determined that the first application of the electronic device is the scenario in which little content is displayed, it may be determined that the sliding curve rate policy of the electronic device is the slow sliding curve rate policy, in other words, the electronic device may continue to perform S520 to S522 described below.

S517: The electronic device determines that the sliding curve rate policy is the slow sliding curve rate policy.

When the electronic device determines that the first application is not the scenario in which little content is displayed (in other words, is the scenario in which much content is displayed), the electronic device may determine that the sliding curve rate policy is the slow sliding curve rate policy.

S518: The electronic device receives a sliding operation of the user.

The electronic device may receive the sliding operation of the user after the electronic device determines that the sliding curve rate policy is the slow sliding curve rate policy.

It should be noted that, that the electronic device determines whether the electronic device is in the scenario in which little content is displayed may be that after the electronic device receives the sliding operation of the user, the electronic device determines whether the electronic device is in the scenario in which little content is displayed, to determine different sliding processing policies depending on whether the electronic device is in the scenario in which little content is displayed. The electronic device may alternatively first determine whether the electronic device is in the scenario in which little content is displayed, to determine a corresponding sliding curve rate policy. Then, when the electronic device receives the sliding operation of the user, the electronic device may determine different sliding processing policies depending on whether the electronic device displays little content. A sequence between determining, by the electronic device, whether the electronic device is in the scenario in which little content is displayed and receiving, by the electronic device, the sliding operation of the user is not limited in this embodiment of this application. In this embodiment of this application, an example in which the electronic device receives the sliding operation of the user after the electronic device determines whether the electronic device is in the scenario in which little content is displayed (in other words, determines a corresponding sliding curve rate policy) is used for description.

S519: The electronic device displays to-be-displayed content in a scrolling manner based on the second initial velocity gain and the second friction coefficient.

When the electronic device receives the sliding operation of the user, in response, the electronic device may display the to-be-displayed content in the scrolling manner based on the second initial velocity gain and the second friction coefficient. In other words, when the electronic device determines that the sliding curve rate policy is the slow sliding curve rate policy, the electronic device may display the to-be-displayed content in the scrolling manner based on the slow sliding curve rate policy. In other words, the electronic device may display, in the scrolling manner based on a second initial velocity gain and a second friction coefficient that correspond to the slow sliding curve rate policy, content not displayed in the first interface.

Because the second initial velocity gain is relatively small, and the first friction coefficient is relatively large, when the electronic device displays, in the scrolling manner based on the second initial velocity gain and the second friction coefficient that correspond to the slow sliding curve rate policy, content not displayed in the first interface, the electronic device may display relatively little to-be-displayed content in the scrolling manner, to avoid appearance of a white block or a black block in the display interface of the electronic device, so that the user can see clearly and focus more easily.

It should be noted that, after the electronic device displays the to-be-displayed content in the scrolling manner based on the second initial velocity gain and the second friction coefficient, the electronic device may further continue to determine whether the first application is in the scenario in which little content is displayed, in other words, the electronic device may continue to perform S516 described above. After the electronic device displays the to-be-displayed content in the scrolling manner based on the second initial velocity gain and the second friction coefficient, the electronic device may further continue to determine whether the scenario is the large-screen scenario, in other words, the electronic device may continue to perform S502 described above. When the electronic device determines that the scenario is the small-screen scenario, the electronic device may determine that the sliding curve rate policy is the quick sliding curve rate policy, in other words, the electronic device may continue to perform S503 to S505 described below. After the electronic device displays the to-be-displayed content in the scrolling manner based on the second initial velocity gain and the second friction coefficient, the electronic device may further continue to determine whether the scenario is the power-saving mode scenario, in other words, the electronic device may further continue to perform S509 described above. When the electronic device determines that the scenario is the non-power-saving mode scenario, the electronic device may determine that the sliding curve rate policy is the quick sliding curve rate policy, in other words, the electronic device may continue to perform S513 to S515 described below.

S520: The electronic device determines that the sliding curve rate policy is the quick sliding curve rate policy.

When the electronic device determines that the first application is in the scenario in which little content is displayed, the electronic device may determine that the sliding curve rate policy is the quick sliding curve rate policy, in other words, adjust the target sliding processing policy to the first sliding processing policy.

S521: The electronic device receives a sliding operation of the user.

After the electronic device determines that the sliding curve rate policy is the quick sliding curve rate policy, the electronic device may receive the sliding operation (which may also be referred to as a third sliding operation in this embodiment of this application) of the user. A sliding parameter of the third sliding operation of the user is the same as that of the first sliding operation of the user. In other words, when the user performs the third sliding operation, a sliding distance, a sliding curve, sliding time, a sliding force, and the like are all the same as those of the first sliding operation.

S522: The electronic device displays to-be-displayed content in a scrolling manner based on the first initial velocity gain and the first friction coefficient.

When the electronic device receives the sliding operation of the user, in response, the electronic device may display the to-be-displayed content in the scrolling manner based on the first initial velocity gain and the first friction coefficient. In other words, the electronic device may display a fourth interface, where the fourth interface may include to-be-displayed content corresponding to the third sliding operation. In other words, when the electronic device determines that the sliding curve rate policy is the quick sliding curve rate policy, the electronic device may display the to-be-displayed content in the scrolling manner based on the quick sliding curve rate policy. In other words, the electronic device may display, in the scrolling manner based on a first initial velocity gain and a first friction coefficient that correspond to the quick sliding curve rate policy, content not displayed in the first interface.

Because the first initial velocity gain is relatively large, and the first friction coefficient is relatively small, when the electronic device displays, in the scrolling manner based on the first initial velocity gain and the first friction coefficient that correspond to the quick sliding curve rate policy, the content not displayed in the first interface, the electronic device may display relatively much to-be-displayed content in the scrolling manner, which can enable the subjective smoothness feeling of the user to be better.

It should be noted that, after the electronic device displays the to-be-displayed content in the scrolling manner based on the first initial velocity gain and the first friction coefficient, the electronic device may further continue to determine whether the first application is in the scenario in which little content is displayed, in other words, the electronic device may continue to perform S516 described above. After the electronic device displays the to-be-displayed content in the scrolling manner based on the first initial velocity gain and the first friction coefficient, the electronic device may further continue to determine whether the scenario is the large-screen scenario, in other words, the electronic device may continue to perform S502 described above. When the electronic device determines that the scenario is the large-screen scenario, the electronic device may determine that the sliding curve rate policy is the slow sliding curve rate policy, in other words, the electronic device may continue to perform S506 to S508 described above. After the electronic device displays the to-be-displayed content in the scrolling manner based on the first initial velocity gain and the first friction coefficient, the electronic device may further continue to determine whether the scenario is the power-saving mode scenario, in other words, the electronic device may continue to perform S509 described above. When the electronic device determines that the scenario is the power-saving mode scenario, the electronic device may determine that the sliding curve rate policy is the slow sliding curve rate policy, in other words, the electronic device may continue to perform S510 to S512 described below.

In the solutions of this application, the electronic device may include the slow sliding curve rate policy and the quick sliding curve rate policy. In a usage process of the electronic device, the electronic device may determine a usage scenario of the electronic device, to use different sliding curve rate policies based on the usage scenario of the electronic device. When the usage scenario is a scenario in which the quick sliding curve rate policy needs to be used, the electronic device may use the quick sliding curve rate policy. When the usage scenario is a scenario in which the slow sliding curve rate policy needs to be used, the electronic device may use the slow sliding curve rate policy.

When the usage scenario is the scenario in which the quick sliding curve rate policy (for example, the foregoing small-screen scenario, non-power-saving mode scenario, and scenario in which little content is displayed in the first application) needs to be used, the electronic device may use the quick sliding curve rate policy. When the electronic device controls the sliding of the page of the electronic device (in other words, displays the to-be-displayed content in the scrolling manner) based on the quick sliding processing policy, duration for which the page of the electronic device is slid may be relatively long, and a distance for which the page is slid may be relatively long, which can enable subjective smoothness feeling of the user to be better.

When the usage scenario is the scenario in which the slow sliding curve rate policy (for example, the foregoing large-screen scenario, power-saving mode scenario, and scenario in which little content is displayed in the first application) needs to be used, the electronic device may use the slow sliding curve rate policy. When the electronic device controls the sliding of the page of the electronic device (in other words, displays the to-be-displayed content in the scrolling manner) based on the slow sliding processing policy, sliding duration of the page of the electronic device may be enabled to be relatively short, and a sliding distance of the page may be enabled to be relatively short, which can enable the user to see clearly and focus more easily. Therefore, according to the solution of this application, the electronic device can use different sliding policies in different usage scenarios, thereby improving usage experience of the user in the different usage scenarios.

Therefore, when a display velocity of the electronic device is relatively low, that the electronic device displays a white block or a black block at a corresponding position can be avoided, thereby improving and affecting usage experience of the user and reducing power consumption of the electronic device, which can enable the user to see clearly and focus more easily.

In addition, when determining the usage scenario of the electronic device, the electronic device may determine the usage scenario of the electronic device based on priorities of scenarios (in other words, importance of the scenarios) and based on an order of the priorities, to accurately determine sliding curve rate policies that need to be used in different scenarios.

It should be noted that, in the foregoing embodiment, an example in which when determining the usage scenario of the electronic device, the electronic device determines, based on the priorities of the scenarios (in other words, the importance of the scenarios) and based on the order of the priorities, which scenario is the usage scenario of the electronic device is used for description. However, when determining the usage scenario of the electronic device, the electronic device may alternatively not determine, based on the priorities of the scenarios (in other words, the importance of the scenarios), which scenario is the usage scenario of the electronic device.

Another display control method provided in embodiments of this application is described in detail below by using an example in which the electronic device is a folded-screen electronic device, a sliding curve rate policy of the electronic device includes a slow sliding curve rate policy and a quick sliding curve rate policy, and usage scenarios of the electronic device include a large-screen scenario, a small-screen scenario, a power-saving mode scenario, a non-power-saving mode scenario, a scenario in which little content is displayed, and a scenario in which much content is displayed.

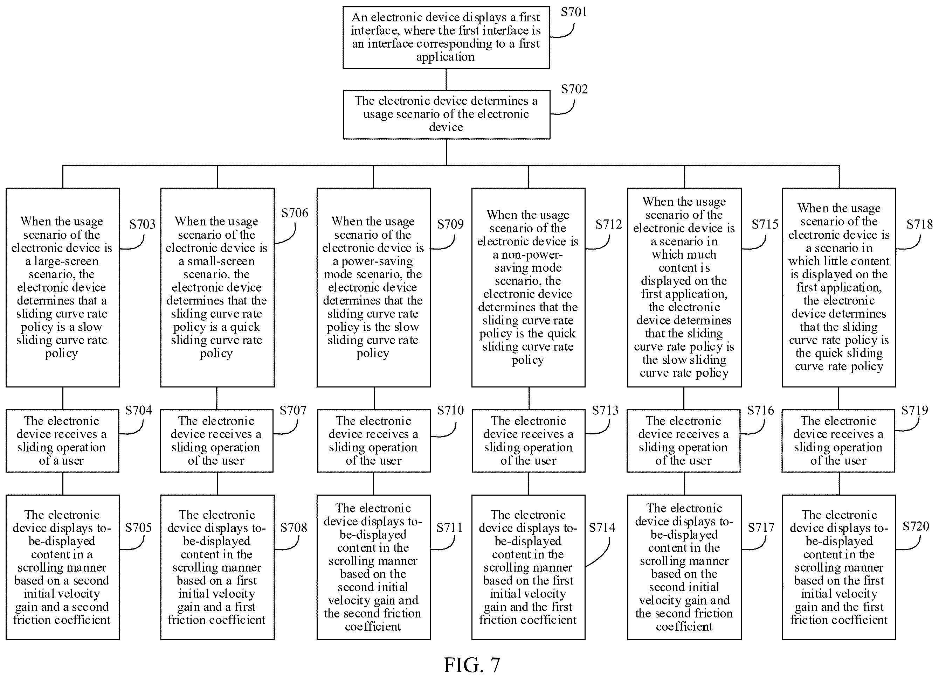

FIG. 7 is a schematic flowchart of another display control method according to an embodiment of this application. As shown in FIG. 7, the display control method may include S701 to S720 described below.

S701: An electronic device displays a first interface, where the first interface is an interface corresponding to a first application.

A sliding curve rate policy of the electronic device may include a slow sliding curve rate policy and a quick sliding curve rate policy. An initial velocity gain corresponding to the quick sliding curve rate policy is a first initial velocity gain, and a friction coefficient corresponding to the quick sliding curve rate policy is a first friction coefficient. An initial velocity gain corresponding to the slow sliding curve rate policy is a second initial velocity gain, and a friction coefficient corresponding to the slow sliding curve rate policy is a second friction coefficient. The first initial velocity gain is greater than the second initial velocity gain, and the first friction coefficient is less than the second friction coefficient.

The first application may be a text-type application, or the first application may be an image-type application or a video-type application. This is not limited in this embodiment of this application.

Specifically, for a specific implementation in which the electronic device displays the first interface in this embodiment of this application, refer to the specific implementation in S501 described above. This is not described again in this embodiment of this application.

S702: The electronic device determines a usage scenario of the electronic device.

The usage scenario of the electronic device may include a large-screen scenario, a small-screen scenario, a power-saving mode scenario, a non-power-saving mode scenario, a scenario in which little content is displayed (in other words, the first application is in the scenario in which little content is displayed), and a scenario in which much content is displayed (in other words, the first application is in the scenario in which much content is displayed).

It may be understood that the usage scenario of the electronic device may further include other scenarios, for example, a scenario in which a network velocity is relatively good (to be specific, a scenario in which a network velocity of the electronic device is greater than or equal to a network velocity threshold), a scenario in which a network velocity is relatively poor (to be specific, a scenario in which a network velocity of the electronic device is less than a network velocity threshold), a scenario in which a percentage of a remaining battery is relatively small (to be specific, a scenario in which a percentage of remaining power of a battery of the electronic device is less than a percentage threshold), a scenario in which a percentage of a remaining battery is relatively large (to be specific, a scenario in which a percentage of remaining power of a battery of the electronic device is greater than or equal to a percentage threshold), a geo-fence scenario (to be specific, a scenario in which the electronic device is located within a range of a preset geo-fence), a non-geo-fence scenario (to be specific, a scenario in which the electronic device is not located within a range of a preset geo-fence), a low-battery extended-endurance scenario (to be specific, a scenario in which use time of a battery of the electronic device needs to be extended when remaining power of the battery is less than a power threshold), and a low-battery non-extended-endurance scenario (to be specific, a scenario in which use time of a battery of the electronic device does not need to be extended when remaining power of the battery is greater than or equal to a power threshold).

It should be noted that, a specific value of the network velocity threshold may be set based on an actual case. This is not limited in this embodiment of this application. A specific value of the percentage threshold may be set based on an actual case. This is not limited in this embodiment of this application. A specific value of the preset geo-fence may be set based on an actual case. This is not limited in this embodiment of this application. A specific value of the power threshold may be set based on an actual case. This is not limited in this embodiment of this application.

When the usage scenario of the electronic device is the scenario in which a network velocity is relatively good, the scenario in which a percentage of a remaining battery is relatively large, the geo-fence scenario, or the low-battery non-extended-endurance scenario, the electronic device may determine that the sliding curve rate policy is the quick sliding curve rate policy. When the usage scenario of the electronic device is the scenario in which a network velocity is relatively poor, the scenario in which a percentage of a remaining battery is relatively small, the non-geo-fence scenario, or the low-battery extended-endurance scenario, the electronic device may determine that the sliding curve rate policy is the slow sliding curve rate policy.

A specific type of the usage scenario of the electronic device is not limited in this embodiment of this application. In this embodiment of this application, an example in which the usage scenario of the electronic device includes the large-screen scenario, the small-screen scenario, the power-saving mode scenario, the non-power-saving mode scenario, the scenario in which little content is displayed, and the scenario in which much content is displayed is used for description.

Because the large-screen scenario and the small-screen scenario are relative scenarios, the electronic device may determine whether the usage scenario of the electronic device is the large-screen scenario, to determine whether the usage scenario of the electronic device is the large-screen scenario or the small-screen scenario. Specifically, for a specific implementation in which the electronic device determines whether the usage scenario of the electronic device is the large-screen scenario in this embodiment of this application, refer to the specific implementation in S502 described above. This is not described again in this embodiment of this application.

Because the power-saving mode scenario and the power-saving mode scenario are relative scenarios, the electronic device may determine whether the usage scenario of the electronic device is the power-saving mode scenario, to determine whether the usage scenario of the electronic device is the power-saving mode scenario or the non-power-saving mode scenario. Specifically, for a specific implementation in which the electronic device determines whether the usage scenario of the electronic device is the power-saving mode scenario in this embodiment of this application, refer to the specific implementation in S509 described above. This is not described again in this embodiment of this application.

Because the scenario in which little content is displayed (in other words, the first application is in the scenario in which little content is displayed) and the scenario in which much content is displayed (in other words, the first application is in the scenario in which much content is displayed) are relative scenarios, the electronic device may determine whether the usage scenario of the electronic device is the scenario in which little content is displayed, to determine whether the usage scenario of the electronic device is the scenario in which little content is displayed or the scenario in which much content is displayed. Specifically, for a specific implementation in which the electronic device determines whether the usage scenario of the electronic device is the scenario in which little content is displayed in this embodiment of this application, refer to the specific implementation in S516 described above. This is not described again in this embodiment of this application.

It should be noted that, when the electronic device determines the usage scenario of the electronic device, the electronic device may determine whether the usage scenario of the electronic device is the large-screen scenario, determine whether the usage scenario of the electronic device is the power-saving mode scenario, or determine whether the usage scenario of the electronic device is the scenario in which little content is displayed. In other words, when determining the usage scenario of the electronic device, the electronic device may perform determining by selecting one of determining whether the scenario is the large-screen scenario, whether the scenario is the power-saving mode scenario, and whether the scenario is the scenario in which little content is displayed.

When the electronic device determines the usage scenario of the electronic device, the electronic device may alternatively perform determining by selecting at least two of determining whether the scenario is the large-screen scenario, whether the scenario is the power-saving mode scenario, and whether the scenario is the scenario in which little content is displayed. When the electronic device performs determining by selecting at least two of determining whether the scenario is the large-screen scenario, whether the scenario is the power-saving mode scenario, and whether the scenario is the scenario in which little content is displayed, the electronic device may perform determining based on a priority of the large-screen scenario, a priority of the power-saving mode scenario, and a priority of the scenario in which little content is displayed and based on an order of the priorities. In other words, for a specific process in which the electronic device performs determining by selecting at least two of determining whether the scenario is the large-screen scenario, whether the scenario is the power-saving mode scenario, and whether the scenario is the scenario in which little content is displayed, refer to S502 to S522 in the foregoing embodiment. Details are not described herein again in this embodiment.

It should be noted that, when the electronic device determines the usage scenario of the electronic device, the electronic device may alternatively simultaneously determine at least two of whether the scenario is the large-screen scenario, whether the scenario is the power-saving mode scenario, and whether the scenario is the scenario in which little content is displayed. After whether the scenario is the large-screen scenario, whether the scenario is the power-saving mode scenario, and whether the scenario is the scenario in which little content is displayed are determined, the usage scenario of the electronic device may be determined based on the priorities of the large-screen scenario, the power-saving mode scenario, and the scenario in which little content is displayed.

For example, an example in which the priority of the large-screen scenario is higher than the priority of the power-saving mode scenario, and the priority of the power-saving mode scenario is higher than the priority of the scenario in which little content is displayed is used. When the electronic device determines the usage scenario of the electronic device, the electronic device may alternatively simultaneously determine whether the scenario is the large-screen scenario, whether the scenario is the power-saving mode scenario, and whether the scenario is the scenario in which little content is displayed. When the electronic device determines that the scenario is the large-screen scenario, is the non-power-saving mode scenario, and is the scenario in which little content is displayed, because the priority of the large-screen scenario is the highest, it may be determined that the usage scenario of the electronic device is the large-screen scenario.

It should be noted that, in this embodiment, an example in which when the electronic device determines the usage scenario of the electronic device, the electronic device performs determining by selecting one of determining whether the scenario is the large-screen scenario, whether the scenario is the power-saving mode scenario, and whether the scenario is the scenario in which little content is displayed is used for description.

It should be noted that, that the electronic device determines the usage scenario of the electronic device may be that after the electronic device receives a sliding operation of a user, the electronic device determines the usage scenario of the electronic device, to determine different sliding processing policies based on the usage scenario of the electronic device. The electronic device may alternatively first determine the usage scenario of the electronic device. Then, when the electronic device receives a sliding operation of a user, the electronic device may determine different sliding processing policies based on the usage scenario of the electronic device. A sequence between determining, by the electronic device, the usage scenario of the electronic device and receiving, by the electronic device, the sliding operation of the user is not limited in this embodiment of this application. In this embodiment of this application, an example in which the electronic device determines the usage scenario of the electronic device after the electronic device receives the sliding operation of the user is used for description.

S703: When the usage scenario of the electronic device is the large-screen scenario, the electronic device determines that the sliding curve rate policy is the slow sliding curve rate policy.

S704: The electronic device receives a sliding operation of the user.

S705: The electronic device displays to-be-displayed content in a scrolling manner based on the second initial velocity gain and the second friction coefficient.

For a specific implementation in which the electronic device displays the to-be-displayed content in the scrolling manner based on the second initial velocity gain and the second friction coefficient in this embodiment of this application, refer to the specific implementation in S508 described above. This is not described again in this embodiment of this application.

S706: When the usage scenario of the electronic device is the small-screen scenario, the electronic device determines that the sliding curve rate policy is the quick sliding curve rate policy.

S707: The electronic device receives a sliding operation of the user.

S708: The electronic device displays to-be-displayed content in a scrolling manner based on the first initial velocity gain and the first friction coefficient.

For a specific implementation in which the electronic device displays the to-be-displayed content in the scrolling manner based on the first initial velocity gain and the first friction coefficient in this embodiment of this application, refer to the specific implementation in S505 described above. This is not described again in this embodiment of this application.

S709: When the usage scenario of the electronic device is the power-saving mode scenario, the electronic device determines that the sliding curve rate policy is the slow sliding curve rate policy.

S710: The electronic device receives a sliding operation of the user.

S711. The electronic device displays to-be-displayed content in a scrolling manner based on the second initial velocity gain and the second friction coefficient.

For a specific implementation in which the electronic device displays the to-be-displayed content in the scrolling manner based on the second initial velocity gain and the second friction coefficient in this embodiment of this application, refer to the specific implementation in S512 described above. This is not described again in this embodiment of this application.

S712: When the usage scenario of the electronic device is the non-power-saving mode scenario, the electronic device determines that the sliding curve rate policy is the quick sliding curve rate policy.

S713: The electronic device receives a sliding operation of the user.

S714: The electronic device displays to-be-displayed content in a scrolling manner based on the first initial velocity gain and the first friction coefficient.

For a specific implementation in which the electronic device displays the to-be-displayed content in the scrolling manner based on the first initial velocity gain and the first friction coefficient in this embodiment of this application, refer to the specific implementation in S515 described above. This is not described again in this embodiment of this application.

S715: When the usage scenario of the electronic device is the scenario in which much content is displayed in the first application, the electronic device determines that the sliding curve rate policy is the slow sliding curve rate policy.

S716: The electronic device receives a sliding operation of the user.

S717: The electronic device displays to-be-displayed content in a scrolling manner based on the second initial velocity gain and the second friction coefficient.

For a specific implementation in which the electronic device displays the to-be-displayed content in the scrolling manner based on the second initial velocity gain and the second friction coefficient in this embodiment of this application, refer to the specific implementation in S522 described above. This is not described again in this embodiment of this application.

S718: When the usage scenario of the electronic device is the scenario in which little content is displayed in the first application, the electronic device determines that the sliding curve rate policy is the quick sliding curve rate policy.

S719: The electronic device receives a sliding operation of the user.

S720: The electronic device displays to-be-displayed content in a scrolling manner based on the first initial velocity gain and the first friction coefficient.

For a specific implementation in which the electronic device displays the to-be-displayed content in the scrolling manner based on the first initial velocity gain and the first friction coefficient in this embodiment of this application, refer to the specific implementation in S519 described above. This is not described again in this embodiment of this application.

In the solutions of this application, the electronic device may include the slow sliding curve rate policy and the quick sliding curve rate policy. In a usage process of the electronic device, the electronic device may determine a usage scenario of the electronic device, to use different sliding curve rate policies based on the usage scenario of the electronic device.

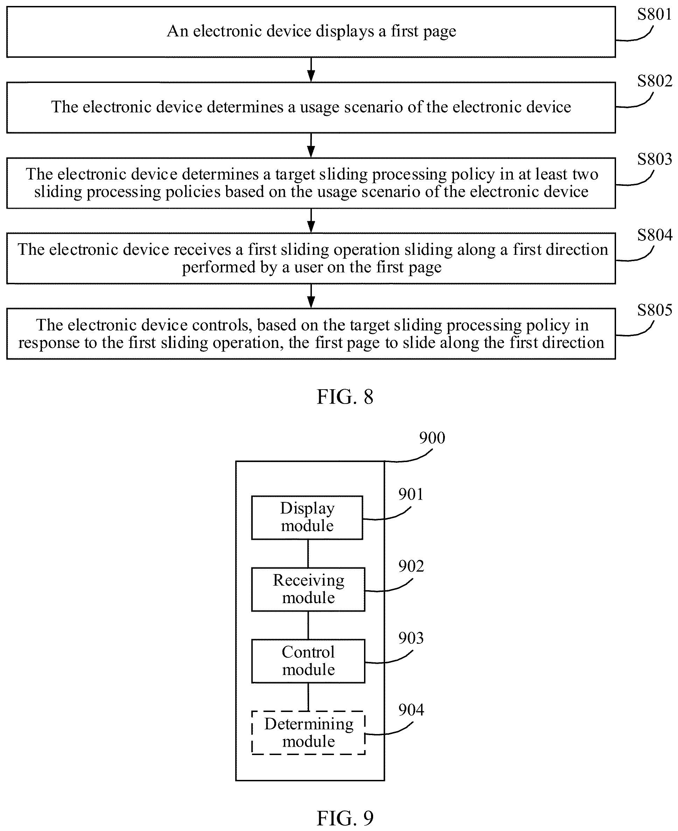

For ease of understanding, with reference to FIG. 8, a display control method according to an embodiment of this application is described below. As shown in FIG. 8, the display control method may include S801 to S805 below.

S801: An electronic device displays a first page.

The first page may be a page corresponding to a first application in the electronic device.

The first application may be a text-type application, or the first application may be an image-type application or a video-type application. The text-type application is an application in which display content is mainly content of a text type, in other words, the first application may be an application in which relatively little content is displayed or a display data amount is relatively small, for example, an address book application, a communication application, or an ebook application. The image-type application or the video-type application is an application in which display content is mainly content of an image type or a video type, in other words, the first application may be an application in which relatively much content is displayed or a display data amount is relatively large, for example, a shopping-type application, a food-type application, or a news-type application. A specific type of the first application is not limited in this embodiment of this application. The first application may be a third-party application, or may be an application in a system of the electronic device. This is not limited in this embodiment of this application.

The electronic device may include at least two sliding processing policies. When the electronic device uses different sliding processing policies, duration for which the first page is slid along a sliding direction in which a user slides on a screen of the electronic device is different, and sliding velocities of the first page are different. A specific quantity of the at least two slide processing policies is not limited in this embodiment of this application. In this embodiment of this application, an example in which the electronic device includes two slide processing policies, namely, the first sliding processing policy and the second sliding processing policy, is used for description.

In some examples, the first sliding processing policy may include a first initial velocity and a first friction coefficient. The second sliding processing policy may include a second initial velocity and a second friction coefficient. The second sliding processing policy includes the second initial velocity and the second friction coefficient, the first initial velocity is greater than the second initial velocity, and the first friction coefficient is less than the second friction coefficient. In other words, when the electronic device executes the first sliding processing policy, the first page is slid by using the first initial velocity and the first friction coefficient. When the electronic device executes the second sliding processing policy, the first page is slid by using the second initial velocity and the second friction coefficient.

An initial velocity is an initial velocity at which the electronic device processes a sliding event when the electronic device recognizes starting of a sliding operation. A friction coefficient is a coefficient using which the electronic device gradually reduces and adjusts, based on strength and a direction of a sliding operation, a velocity of processing a sliding event. Because the first initial velocity is greater than the second initial velocity, and the first friction coefficient is less than the second friction coefficient, the first sliding processing policy may be a quick sliding processing policy, and the second sliding processing policy may be a slow sliding processing policy. Because the first initial velocity corresponding to the first sliding processing policy is relatively large, and the first friction coefficient corresponding to the first sliding processing policy is relatively small, when the electronic device controls, based on the first sliding processing policy, the page of the electronic device to slide, duration for which the page of the electronic device is slid may be enabled to be relatively long, and a distance for which the page is slid may be enabled to be relatively long, so that relatively much content may be newly loaded on the page, which can enable the subjective smoothness feeling of the user to be better. Because the second initial velocity corresponding to the second sliding processing policy is relatively small, and the second friction coefficient corresponding to the second sliding processing policy is relatively large, when the electronic device controls, based on the second sliding processing policy, the page of the electronic device to slide, duration for which the page of the electronic device is slid may be enabled to be relatively short, and a distance for which the page is slid may be enabled to be relatively short, so that relatively little content may be newly loaded on the page, which can enable the user to see clearly and focus more easily.

It should be noted that, the first page is a menu-type page (for example, a list view-type page), in other words, content currently displayed on the first page is menu-type content. In other words, when the electronic device receives the sliding operation of the user on the first page, the electronic device may display, in a scrolling manner, content not currently displayed on the first page. For example, the menu-type page may be a communication-type page or may be a shopping-type page. In other words, when the electronic device displays the communication-type page, if the electronic device receives the sliding operation of the user on the first page, the electronic device may display, in the scrolling manner, the content not currently displayed on the first page.

When the first page is the menu-type page, the electronic device may determine a usage scenario of the electronic device, so that the electronic device may determine different sliding processing policies based on the usage scenario of the electronic device. Based on the different sliding processing policies, the electronic device may display a second page corresponding to the first application (the second page includes the content not currently displayed on the first page).

When the first page is not the menu-type page (for example, a main page of a game or a page for watching a video), the electronic device may not determine different sliding processing policies. In other words, in this case, the sliding processing policy of the electronic device is fixed. Moreover, when the first page is not the menu-type page (for example, a main page of a game or a page for watching a video), the electronic device still displays the first page if the electronic device receives the sliding operation of the user on the first page.

In other words, after the electronic device displays the first page, the electronic device may first determine the type of the first page. When the type of the first page is the menu-type page, the electronic device may determine the usage scenario of the electronic device, and may determine the different sliding processing policies based on the usage scenario of the electronic device. In other words, when the type of the first page is the menu-type page, the electronic device may perform the display control method provided in this application, to display, based on the different sliding processing policies, the second page corresponding to the first application (the second page includes the content not currently displayed on the first page).

S802: The electronic device determines the usage scenario of the electronic device.

The electronic device may determine the usage scenario of the electronic device, to determine a target sliding processing policy in the at least two sliding processing policies based on the usage scenario of the electronic device.

In some examples, the usage scenario of the electronic device may include at least two types of sliding scenarios, and different types of sliding scenarios correspond to different sliding processing policies. For example, the types of the sliding scenarios may include a quick sliding scenario, a slow sliding scenario, and the like. Specific data of the at least two types of sliding scenarios is not limited in this embodiment of this application. In this embodiment of this application, an example in which the usage scenario of the electronic device includes two sliding scenarios is used for description. In other words, the usage scenario of the electronic device may be the quick sliding scenario and the slow sliding scenario.

The quick sliding scenario is a scenario in which the electronic device needs to use the quick sliding processing policy (namely, the first sliding processing policy). The slow sliding scenario is a scenario in which the electronic device needs to use the slow sliding processing policy (namely, the second sliding processing policy).

In some examples, the quick sliding scenario may include a plurality of scenarios. For example, the quick sliding scenario may include a small-screen scenario, a non-power-saving mode scenario, a non-high-temperature scenario, a text scenario, and the like. A specific type of the quick sliding scenario is not limited in this embodiment of this application. An example in which the quick sliding scenario includes the small-screen scenario, the non-power-saving mode scenario, and the text scenario is used for description in this embodiment of this application.

The small-screen scenario is that the electronic device is a folded-screen electronic device and a folded screen of the electronic device is in a folded state.

The non-power-saving mode scenario is that a mode of the electronic device is a non-power-saving mode.

The non-high-temperature scenario is that a temperature of the electronic device is less than a temperature threshold. A specific value of the temperature threshold may be set based on an actual case. This is not limited in this embodiment of this application.

The text scenario is that a data amount of to-be-displayed content is less than a data amount threshold, a type of to-be-displayed content is a text type, or a data amount of a text type in to-be-displayed content is greater than a data amount of an image type and/or a video type. The data amount threshold may be specifically set based on an actual case. This is not limited in this embodiment of this application. The to-be-displayed content is content newly loaded on the first page after the first page responds to a first sliding operation. In other words, when the electronic device controls, based on the target sliding processing policy in response to the sliding operation of the user, the page to slide, the page after the sliding may include newly loaded content or may include some originally loaded content.

It should be noted that, the quick sliding scenario may further include a scenario in which a network velocity is relatively good, a scenario in which a percentage of a remaining battery is relatively large, a geo-fence scenario, a low-battery non-extended-endurance scenario, and the like.

The scenario in which a network velocity is relatively good is that a network velocity of the electronic device is greater than or equal to a network velocity threshold. The network velocity threshold may be specifically set based on an actual case. This is not limited in this embodiment of this application. The scenario in which a percentage of a remaining battery is relatively large is that a percentage of remaining power of a battery of the electronic device is greater than or equal to a percentage threshold. The percentage threshold may be specifically set based on an actual case. This is not limited in this embodiment of this application. The geo-fence scenario is that the electronic device is located within a range of a preset geo-fence. The preset geo-fence may be a geo-fence in which a family of the user is located, a geo-fence in which an office place of the user is located, or the like. The low-battery non-extended-endurance scenario is that when the remaining power of the battery of the electronic device is greater than or equal to a power threshold, use time of the battery does not need to be extended. The power threshold may be specifically set based on an actual case. This is not limited in this embodiment of this application.

In some examples, the slow sliding scenario may include a plurality of scenarios. For example, the slow sliding scenario may include a large-screen scenario, a power-saving mode scenario, a high-temperature scenario, a non-text scenario, and the like. A specific type of the slow sliding scenario is not limited in this embodiment of this application. An example in which the slow sliding scenario includes the large-screen scenario, the power-saving mode scenario, and the non-text scenario is used for description in this embodiment of this application.

The large-screen scenario is that the electronic device is a folded-screen electronic device, and a folded screen of the electronic device is in an unfolded state. The power-saving mode scenario is that a mode of the electronic device is a power-saving mode. The non-text scenario means that a data amount of to-be-displayed content of the first application is greater than or equal to a data amount threshold, a type of the to-be-displayed content includes an image type or a video type, or a data amount of a text type in the to-be-displayed content is less than a data amount of the image type and/or the video type. The high-temperature scenario is that a temperature of the electronic device is greater than or equal to a temperature threshold.

It should be noted that, the slow sliding scenario may further include a scenario in which a network velocity is relatively poor, a scenario in which a percentage of a remaining battery is small, a non-geo-fence scenario, a low-battery extended-endurance scenario, and the like. The scenario in which a network velocity is relatively poor is that a network velocity of the electronic device is less than a network velocity threshold. The scenario in which a percentage of a remaining battery is small means that a percentage of remaining power of a battery of the electronic device is less than a percentage threshold. The non-geo-fence scenario is that the electronic device is not located within a range of a preset geo-fence. The low-battery extended-endurance scenario is that when the remaining power of the battery of the electronic device is less than a power threshold, use time of the battery needs to be extended.

In some examples, when the electronic device is a folded-screen electronic device (which may also be referred to as a foldable electronic device), that the electronic device determines the usage scenario of the electronic device may include that the electronic device determines whether a usage scenario of the foldable electronic device is the large-screen scenario, to determine whether the usage scenario of the foldable electronic device is the large-screen scenario or the small-screen scenario. Specifically, for a specific implementation in which the foldable electronic device determines whether the usage scenario of the foldable electronic device is the large-screen scenario, refer to the specific implementation in S502 described above. This is not described again in this embodiment of this application.

In other words, when the electronic device is the folded-screen electronic device (which may also be referred to as the foldable electronic device), and a folded screen of the foldable electronic device is in an unfolded state, it may be determined that the usage scenario of the foldable electronic device is the large-screen scenario, and the slow sliding scenario includes the large-screen scenario. When the foldable electronic device is the folded-screen electronic device, and the folded screen of the foldable electronic device is in a folded state, it may be determined that the usage scenario of the foldable electronic device is the small-screen scenario, and the quick sliding scenario includes the small-screen scenario.

When the folded screen of the foldable electronic device is in the unfolded state, the usage scenario of the foldable electronic device is the slow sliding scenario, so that the foldable electronic device may use the slow sliding processing policy, so that duration for which a page of the foldable electronic device is slid is relatively short and a distance for which the page is slid is relatively short. Therefore, content newly loaded on the page of the foldable electronic device after the page of the foldable electronic device responds to the sliding operation is relatively little, so that power consumption used when the folded screen of the foldable electronic device is in the unfolded state can be reduced, and that the foldable electronic device displays a white block or a black block when content newly loaded (namely, the to-be-displayed content) is relatively much or the new content is relatively slowly loaded on the electronic device can be avoided, thereby improving user experience. When the folded screen of the foldable electronic device is in the folded state, the usage scenario of the foldable electronic device is the quick sliding scenario, so that the foldable electronic device may use the quick sliding processing policy, so that duration for which a page of the foldable electronic device is slid is relatively long and a distance for which the page is slid is relatively long. Therefore, content newly loaded on the page of the foldable electronic device after the page of the foldable electronic device responds to the sliding operation is relatively much, so that the subjective smoothness feeling of the user can be enabled to be better, in other words, a case in which when the user performs a quick sliding operation on the screen of the foldable electronic device, the user feels that the electronic device responds relatively slowly can be avoided, thereby improving usage experience of the user.

In some other examples, that the electronic device determines the usage scenario of the electronic device may include that the electronic device determines whether the usage scenario of the electronic device is the power-saving mode scenario, to determine whether the usage scenario of the electronic device is the power-saving mode scenario or the non-power-saving mode scenario. Specifically, for a specific implementation in which the electronic device determines whether the usage scenario of the electronic device is the power-saving mode scenario, refer to the specific implementation in S509 described above. This is not described again in this embodiment of this application.

In other words, when the mode of the electronic device is the power-saving mode, it may be determined that the usage scenario of the electronic device is the power-saving mode scenario, and the slow sliding scenario includes the power-saving mode scenario. When the mode of the electronic device is the non-power-saving mode, it may be determined that the usage scenario of the electronic device is the non-power-saving mode scenario, and the quick sliding scenario includes the non-power-saving mode scenario.

When the mode of the electronic device is the power-saving mode, the usage scenario of the electronic device is the slow sliding scenario, so that the electronic device may use the slow sliding processing policy, and the duration for which the page of the electronic device is slid is relatively short, and the distance for which the page is slid is relatively short, which can enable the user to see clearly and focus more easily, thereby reducing power consumption of the electronic device. In addition, when the usage scenario of the electronic device is the power-saving mode scenario, because the electronic device is based on the slow sliding processing policy, the duration for which the page is slid is enabled to be relatively short and the distance for which the page is slid is enabled to be relatively short. Therefore, content newly loaded on the page of the electronic device after the page of the electronic device responds to the sliding operation is relatively little, so that power consumption of the electronic device can be reduced, thereby saving power. When the mode of the electronic device is the non-power-saving mode, the usage scenario of the electronic device is the quick sliding scenario, so that the electronic device may use the quick sliding processing policy, which can enable the subjective smoothness feeling of the user to be better.

In some other examples, that the electronic device determines the usage scenario of the electronic device may include that the electronic device determines whether the usage scenario of the electronic device is the high-temperature scenario, in other words, determines whether the temperature of the electronic device is greater than the temperature threshold.

In other words, when the temperature of the electronic device is greater than the temperature threshold, it may be determined that the usage scenario of the electronic device is the high-temperature scenario, and the slow sliding scenario includes the high-temperature scenario. When the temperature of the electronic device is less than the temperature threshold, it may be determined that the usage scenario of the electronic device is the non-high-temperature scenario, and the quick sliding scenario includes the non-high-temperature scenario.

When the temperature of the electronic device is higher than the temperature threshold, the usage scenario of the electronic device is the slow sliding scenario, so that the electronic device may use the slow sliding processing policy, so that the duration for which the page of the electronic device is slid is enabled to be relatively short, and the distance for which the page is slid is enabled to be relatively short, which can enable the user to see clearly and focus more easily. In addition, when the temperature of the electronic device is higher than the temperature threshold, because the electronic device uses the slow sliding processing policy, the duration for which the page is slid is relatively short, and the distance for which the page is slid is relatively short. Therefore, content newly loaded on the page of the electronic device after the page of the electronic device responds to the sliding operation is relatively little, so that power consumption of the electronic device can be reduced, thereby reducing the temperature of the electronic device.

When the temperature of the electronic device is lower than the temperature threshold, the usage scenario of the electronic device is the quick sliding scenario, so that the electronic device may use the quick sliding processing policy, which can enable the subjective smoothness feeling of the user to be better.

In some other examples, that the electronic device determines the usage scenario of the electronic device may include that the electronic device determines whether the usage scenario of the electronic device is the text scenario, to determine whether the usage scenario of the electronic device is the text scenario or the non-text scenario. Specifically, for a specific implementation in which the electronic device determines whether the usage scenario of the electronic device is the text scenario, refer to the specific implementation in S516 described above. This is not described again in this embodiment of this application.

In other words, when the data amount of the to-be-displayed content is greater than or equal to the data amount threshold, or the type of the to-be-displayed content includes the image type or the video type, it is determined that the usage scenario of the electronic device is the non-text scenario, and the slow sliding scenario includes the non-text scenario. When the data amount of the to-be-displayed content is less than the data amount threshold, or the type of the to-be-displayed content is the text type, it may be determined that the usage scenario of the electronic device is the text scenario, and the quick sliding scenario includes the text scenario.

When the data amount of the to-be-displayed content is greater than or equal to the data amount threshold, or the type of the to-be-displayed content includes the image type or the video type, the usage scenario of the electronic device is the slow sliding scenario, so that the electronic device may use the slow sliding processing policy, so that the duration for which the page of the electronic device is slid is enabled to be relatively short, and the distance for which the page is slid is enabled to be relatively short, which can enable the user to see clearly and focus more easily. In addition, because the electronic device uses the slow sliding processing policy, the duration for which the page is slid is relatively short and the distance for which the page is slid is relatively short. Therefore, content newly loaded on the page of the electronic device after the page of the electronic device responds to the sliding operation is relatively little, so that power consumption of the electronic device can be reduced, which can enable the subjective smoothness feeling of the user to be better. In addition, a problem of displaying a white block or a black block by the electronic device due to that relatively much content is newly loaded and the new content is relatively slowly loaded can be avoided, thereby improving usage experience of the user.

When the data amount of the to-be-displayed content is less than the data amount threshold, or the type of the to-be-displayed content is the text type, the usage scenario of the electronic device is the quick sliding scenario, so that the electronic device may use the quick sliding processing policy, which can enable the subjective smoothness feeling of the user to be better.

It should be noted that, when the electronic device determines the usage scenario of the electronic device, the electronic device may perform determining by selecting one of whether the scenario is the large-screen scenario, whether the scenario is the power-saving mode scenario, and whether the scenario is the text scenario. For a specific implementation in which the electronic device performs determining by selecting one, refer to the specific implementation shown in FIG. 7 described above. This is not described again in this embodiment of this application.

When the electronic device determines the usage scenario of the electronic device, the electronic device may perform determining, based on priorities of scenarios (in other words, importance of different scenarios), from whether the scenario is the large-screen scenario, whether the scenario is the power-saving mode scenario, and whether the scenario is the text scenario. For a specific implementation in which the electronic device performs determining based on the priorities of scenarios (in other words, importance of the different scenarios), refer to the specific implementation in S502 to S522. This is not described again in this embodiment of this application.

In some other examples, that the electronic device determines the usage scenario of the electronic device may alternatively include: When the first application is an application in a quick sliding application list, it is determined that the usage scenario of the electronic device is the quick sliding scenario; and when the first application is an application in a slow sliding application list, it is determined that the usage scenario of the electronic device is the slow sliding scenario.

The quick sliding application list may include at least one application, for example, an identifier of the at least one application. In other words, an application included in the quick sliding application list is an application corresponding to the quick sliding scenario. The slow sliding application list may include at least one application, for example, an identifier of the at least one application program. In other words, an application included in the slow sliding application list is an application corresponding to the slow sliding scenario. A type of the first application is determined by using the quick sliding application list or the slow sliding application list, so that whether the usage scenario of the electronic device is the quick sliding scenario or the slow sliding scenario can be quickly determined based on the type of the first application.

It should be noted that, when determining the usage scenario of the electronic device, the electronic device may alternatively determine, based on the quick sliding application list (or the slow sliding application list), whether the usage scenario of the electronic device is the quick sliding scenario or the slow sliding scenario. In other words, when the first application is an application in the quick sliding application list, it may be determined that the usage scenario of the electronic device is the quick sliding scenario, or when the first application is not an application in the quick sliding application list, it may be determined that the usage scenario of the electronic device is the slow sliding scenario. Alternatively, when the first application is an application in the slow sliding application list, it may be determined that the usage scenario of the electronic device is the slow sliding scenario, or when the first application is not an application in the slow sliding application list, it may be determined that the usage scenario of the electronic device is the quick sliding scenario.

In some other examples, that the electronic device determines the usage scenario of the electronic device may alternatively include: a large-small-screen scenario. The large-small-screen scenario is that when a folded screen of a folded-screen electronic device is in an unfolded state, both a large screen (in other words, the folded screen of the electronic device, which may also be referred to as an inner screen) and a small screen (in other words, an outer screen corresponding to the inner screen of the electronic device) of the electronic device are in a use state (in other words, both the large screen and the small screen of the electronic device are in a screen-on state). When the usage scenario of the electronic device is the large-small-screen scenario, the electronic device may determine that the usage scenario of the electronic device is the slow sliding scenario, in other words, the electronic device may determine that the target sliding processing policy is the slow sliding processing policy.

It should be noted that, when the usage scenario of the electronic device is the large-small-screen scenario, the electronic device may alternatively determine that the usage scenario of the electronic device is the quick sliding scenario, in other words, the electronic device may determine that the target sliding processing policy is the quick sliding processing policy. A specific type that is of the usage scenario of the electronic device and that is determined by the electronic device when the usage scenario of the electronic device is the large-small-screen scenario is not limited in this embodiment of this application. An example in which the usage scenario of the electronic device is the slow sliding scenario when the usage scenario of the electronic device is the large-small-screen scenario is used in this embodiment of this application for description.

In some other examples, that the electronic device determines the usage scenario of the electronic device may alternatively include: a screen projection scenario. The screen projection scenario is that the electronic device mirrors and displays content on the screen to a screen of another electronic device in real time. When the usage scenario of the electronic device is the screen projection scenario, the electronic device may continue to determine whether the electronic device is the small-screen scenario (in other words, determine whether a state of the folded screen of the folded-screen electronic device is the folded state). When the electronic device determines that the scenario is not the small-screen scenario (in other words, is the large-screen scenario), the electronic device may determine that the usage scenario of the electronic device is the slow sliding scenario, in other words, the electronic device may determine that the target sliding processing policy is the slow sliding processing policy. When the electronic device determines that the scenario is the small-screen scenario, the electronic device may determine that the usage scenario of the electronic device is the quick sliding scenario, in other words, the electronic device may determine that the target sliding processing policy is the quick sliding processing policy.

It should be noted that, that the electronic device determines the usage scenario of the electronic device may be that after the electronic device receives a sliding operation of a user, the electronic device determines the usage scenario of the electronic device, to determine different sliding processing policies based on the usage scenario of the electronic device. The electronic device may alternatively first determine the usage scenario of the electronic device. Then, when the electronic device receives a sliding operation of a user, the electronic device may determine different sliding processing policies based on the usage scenario of the electronic device. A sequence between determining, by the electronic device, the usage scenario of the electronic device and receiving, by the electronic device, the sliding operation of the user is not limited in this embodiment of this application. In this embodiment of this application, an example in which the electronic device determines the usage scenario of the electronic device after the electronic device receives the sliding operation of the user is used for description.

S803: The electronic device determines the target sliding processing policy in the at least two sliding processing policies based on the usage scenario of the electronic device.

In some examples, that the electronic device determines the target sliding processing policy in the at least two sliding processing policies based on the usage scenario of the electronic device may include: When the usage scenario of the electronic device is the quick sliding scenario, the electronic device determines that the target sliding processing policy is the first sliding processing policy (namely, the quick sliding processing policy). When the usage scenario of the electronic device is the slow sliding scenario, the electronic device determines that the target sliding processing policy is the second sliding processing policy (namely, the slow sliding processing policy).

When the target sliding processing policy is the first sliding processing policy, duration for which a page of the electronic device is displayed in a scrolling manner is first duration, and a distance for which the page of the electronic device is slid is a first distance. When the target sliding processing policy is the second sliding processing policy, duration for which a page of the electronic device is displayed in a scrolling manner is second duration, and a distance for which the electronic device is slid is a second distance, where the first duration is greater than the second duration, and the first distance is greater than the second distance.

To-be-displayed content of the first application used when the sliding processing policy is the first sliding processing policy is more than to-be-displayed content of the first application used when the sliding processing policy is the second sliding processing policy. In other words, after the electronic device determines the usage scenario, a velocity at which the electronic device displays the to-be-displayed content of the first application if the electronic device uses the first sliding processing policy (namely, the quick sliding processing policy) in the usage scenario is higher than a velocity at which the electronic device displays the to-be-displayed content of the first application if the electronic device uses the second sliding processing policy (namely, the slow sliding processing policy) in the usage scenario. In other words, after the electronic device determines the usage scenario, a data amount, of the to-be-displayed content that is of the first application and that is displayed by the electronic device, used if the electronic device uses the first sliding processing policy (namely, the quick sliding processing policy) in the usage scenario is greater than a data amount, of the to-be-displayed content that is of the first application and that is displayed by the electronic device, used if the electronic device uses the second sliding processing policy (namely, the slow sliding processing policy) in the usage scenario.

Because the first sliding processing policy may be the quick sliding processing policy, and the second sliding processing policy may be the slow sliding processing policy, when the usage scenario of the electronic device is the quick sliding scenario, the electronic device may respond to the sliding operation of the user relatively quickly based on the first sliding processing policy, or when the usage scenario of the electronic device is the slow sliding scenario, the electronic device may respond to the sliding operation of the user relatively slowly based on the second sliding processing policy.

In some examples, when the usage scenario of the electronic device is the large-screen scenario, it may be determined that the target sliding processing policy is the second sliding processing policy (namely, the slow sliding processing policy). When the usage scenario of the electronic device is the small-screen scenario, it may be determined that the target sliding processing policy is the first sliding processing policy (namely, the quick sliding processing policy).

In some other examples, when the usage scenario of the electronic device is the power-saving mode scenario, it may be determined that the target sliding processing policy is the second sliding processing policy (namely, the slow sliding processing policy). When the usage scenario of the electronic device is the non-power-saving mode scenario, it may be determined that the target sliding processing policy is the first sliding processing policy (namely, the quick sliding processing policy).

In some other examples, when the usage scenario of the electronic device is the non-text scenario, it may be determined that the target sliding processing policy is the second sliding processing policy (namely, the slow sliding processing policy). When the usage scenario of the electronic device is the text scenario, it may be determined that the target sliding processing policy is the first sliding processing policy (namely, the quick sliding processing policy).

In some other examples, when the first application is an application in the slow sliding application list, it may be determined that the target sliding processing policy is the second sliding processing policy (namely, the slow sliding processing policy). When the first application is an application in the quick sliding application list, it may be determined that the target sliding processing policy is the first sliding processing policy (namely, the quick sliding processing policy).

It should be noted that, when the electronic device determines the usage scenario of the electronic device, and the electronic device performs determining based on priorities of scenarios (in other words, importance of different scenarios), that the electronic device determines, based on the usage scenario of the electronic device, the target sliding processing policy in the at least two sliding processing policies may include: When the usage scenario of the electronic device is the small-screen scenario, it is determined that the target sliding processing policy is the first sliding processing policy. Then, whether the usage scenario of the electronic device is the power-saving mode scenario may be determined. The target sliding processing policy may be adjusted to the second sliding processing policy when the usage scenario of the electronic device is the power-saving mode scenario. Then, whether the usage scenario of the electronic device is the text scenario may be determined. The target sliding processing policy is adjusted to the first sliding processing policy when the usage scenario of the electronic device is the text scenario. When the usage scenario of the electronic device is determined, whether scenarios of the electronic device are the small-screen scenario, the power-saving mode scenario, and the text scenario may be sequentially determined, so that the sliding processing policy can be accurately determined.

S804: The electronic device receives a first sliding operation of the user sliding along a first direction on the first page.

In some examples, the first direction may be an upward direction on the first page, the first direction may alternatively be an upward direction on the first page, the first direction may alternatively be a rightward direction on the first page, the first direction may alternatively be a rightward direction on the first page, and the first direction may alternatively be another direction on the first page. A specific direction of the first direction is not limited in this embodiment of this application.

S805: The electronic device controls, based on the target sliding processing policy in response to the first sliding operation, the first page to slide along the first direction.

When the electronic device receives the first sliding operation, the electronic device may control, based on the target sliding processing policy in response to the first sliding operation, the first page to slide along the first direction. When the target sliding processing policy is the first sliding processing policy, duration for which the first page is slid along the first direction is first duration, and a distance for which the first page is slid is a first distance. When the target sliding processing policy is the second sliding processing policy, duration for which the first page is slid along the first direction is second duration, and a distance for which the first page is slid is a second distance, where the first duration is greater than the second duration, and the first distance is greater than the second distance.

In some examples, when the usage scenario of the foldable electronic device is the small-screen scenario, after the electronic device controls, based on the target sliding processing policy, the first page to slide along the first direction, the method may further include: Whether the usage scenario of the foldable electronic device is the power-saving mode scenario is determined. The target sliding processing policy is adjusted to the second sliding processing policy when the usage scenario of the foldable electronic device is the power-saving mode scenario. Then, the foldable electronic device may receive a second sliding operation of the user sliding along the first direction on the first page. The foldable electronic device may control, based on the second sliding processing policy in response to the second sliding operation, the first page to slide along the first direction. Then, whether the usage scenario of the foldable electronic device is the text scenario may continue to be determined. The target sliding processing policy is adjusted to the first sliding processing policy when the usage scenario of the foldable electronic device is the text scenario. Then, the foldable electronic device may receive a third sliding operation of the user sliding along the first direction on the first page. The foldable electronic device may control, based on the first sliding processing policy in response to the third sliding operation, the first page to slide along the first direction.

It should be noted that, sliding parameters of the second sliding operation and the third sliding operation are the same as the sliding parameter of the first sliding operation. In other words, sliding distances, sliding curves, sliding time, and sliding forces of the second sliding operation and the third sliding operation are all the same as the sliding distance, the sliding curve, the sliding time, and the sliding force of the first sliding operation.

In the solution of this application, when the electronic device receives the sliding operation of the user, the electronic device may determine different sliding processing policies based on the usage scenario of the electronic device, so that the electronic device can control, based on the different sliding processing policies, a page to slide.

Due to the different sliding processing policies, duration for which the page of the electronic device is slid and a distance for which the page is slid both vary. Therefore, when the electronic device controls, based on the quick sliding processing policy (namely, the first sliding processing policy), the page of the electronic device to slide, the duration for which the page of the electronic device is slid is relatively long and the distance for which the page is slid is relatively long, which can enable the subjective smoothness feeling of the user to be better. When the electronic device controls, based on the slow sliding processing policy (namely, the second sliding processing policy), the page of the electronic device to slide, duration for which the page of the electronic device is slid may be enabled to be relatively short, and a distance for which the page is slid may be enabled to be relatively short, which can enable the user to see clearly and focus more easily. Therefore, according to the solution of this application, the electronic device can use different sliding policies in different usage scenarios, thereby improving usage experience of the user in the different usage scenarios.

It should be noted that, when the electronic device is the foldable electronic device, the foldable electronic device may include a first screen body and a second screen body that are relatively disposed, and a display area of the second screen body is greater than a display area of the first screen body. When the foldable electronic device is in a folded state, the foldable electronic device controls the first screen body to display the first page. In other words, when the foldable electronic device is in the folded state, the first screen body may also be referred to as a small screen. When the foldable electronic device is in an unfolded state, the foldable electronic device controls the second screen body to display the first page, and the second screen body may also be referred to as a large screen.

The foldable electronic device may include the first sliding processing policy and the second sliding processing policy. When the sliding processing policy of the foldable electronic device is the first sliding processing policy, duration for which the first page of the foldable electronic device is slid along the first direction is first duration, and a distance for which the first page is slid is a first distance. When the sliding processing policy of the foldable electronic device is the second sliding processing policy, duration for which the first page of the foldable electronic device is slid is second duration, and a distance for which the first page is slid is a second distance. The first duration is greater than the second duration, and the first distance is greater than the second distance.

For the foldable electronic device, the display control method provided in this embodiment of this application may include the following process: When the foldable electronic device is in the folded state, the first screen body is controlled to display the first page. Then, the foldable electronic device may receive the first sliding operation of the user along the first direction on the first screen body. In response to the first sliding operation, the first page is slid along the first direction for the first duration, and the distance for which the first page is slid is the first distance.

When the foldable electronic device is in the unfolded state, the second screen body is controlled to display the first page. Then, the foldable electronic device may receive the first sliding operation of the user along the first direction on the second screen body. In response to the first sliding operation, the first page is slid along the first direction for the second duration, and the distance for which the first page is slid is the second distance. The first duration is greater than the second duration, and the first distance is greater than the second distance.

When the foldable electronic device is in the unfolded state, the foldable electronic device controls, based on the second sliding processing policy (namely, the slow sliding processing policy), the page to slide, so that duration for which the page of the foldable electronic device is slid may be enabled to be relatively short, and a distance for which the page is slid may be enabled to be relatively short. Therefore, content newly loaded on the page is relatively little, which can enable the user to see clearly and focus more easily. In addition, when the foldable electronic device is in the unfolded state, because the foldable electronic device is based on the second sliding processing policy, duration for which the page is slid is relatively short and a distance for which the page is slid is relatively short. Therefore, content newly loaded on the page of the foldable electronic device after the page of the foldable electronic device responds to the sliding operation is relatively little, thereby reducing power consumption of the foldable electronic device. In addition, a problem of displaying a white block or a black block by the foldable electronic device due to that relatively much content is newly loaded and the new content is relatively slowly loaded can be avoided, thereby improving usage experience of the user.

Corresponding to the methods in the foregoing embodiments, an embodiment of this application further provides a display control apparatus. The display control apparatus is applicable to an electronic device, to implement the methods in the foregoing embodiments. Functions of the display control apparatus may be implemented by hardware or may be implemented by hardware by executing corresponding software. The hardware or software includes one or more modules corresponding to the functions.

For example, FIG. 9 is a diagram of a structure of a display control apparatus 900. As shown in FIG. 9, the display control apparatus 900 may include: a display module 901, a receiving module 902, a control module 903, and the like.

The display module 901 may be configured to display a first page.

The receiving module 902 may be configured to receive a first sliding operation of a user sliding along a first direction on the first page.

The control module 903 may be configured to control, by the electronic device based on a target sliding processing policy in response to the first sliding operation, the first page to slide along the first direction, where the at least two sliding processing policies include a first sliding processing policy and a second sliding processing policy; and when the target sliding processing policy is the first sliding processing policy, duration for which the first page is slid along the first direction is first duration, and a distance for which the first page is slid is a first distance; or when the target sliding processing policy is the second sliding processing policy, duration for which the first page is slid along the first direction is second duration, a distance for which the first page is slid is a second distance, where the first duration is greater than the second duration, and the first distance is greater than the second distance.

In another possible implementation, the first page is slid at a first initial velocity and a first friction coefficient when the electronic device executes the first sliding processing policy, or the first page is slid at a second initial velocity and a second friction coefficient when the electronic device executes the second sliding processing policy, where the first initial velocity is greater than the second initial velocity, and the first friction coefficient is less than the second friction coefficient.

In another possible implementation, the display control apparatus 900 may further include a determining module 904.

The determining module 904 may be configured to determine that the target sliding processing policy is the second sliding processing policy when a usage scenario of a foldable electronic device is a large-screen scenario. The large-screen scenario includes that the foldable electronic device is in an unfolded state.

The determining module 904 may alternatively be configured to determine that the target sliding processing policy is the first sliding processing policy when the usage scenario of the foldable electronic device is a small-screen scenario. The small-screen scenario includes that the foldable electronic device is in a folded state.

In another possible implementation, the determining module 904 may alternatively be configured to determine that the target sliding processing policy is the second sliding processing policy when a usage scenario of the electronic device is a power-saving mode scenario.

The determining module 904 may alternatively be configured to determine that the target sliding processing policy is the first sliding processing policy when the usage scenario of the electronic device is a non-power-saving mode scenario.

In another possible implementation, the determining module 904 may alternatively be configured to determine that the target sliding processing policy is the second sliding processing policy when a usage scenario of the electronic device is a high-temperature scenario, where the high-temperature scenario includes that a temperature of the electronic device is greater than or equal to a temperature threshold.

The determining module 904 may alternatively be configured to determine that the target sliding processing policy is the first sliding processing policy when the usage scenario of the electronic device is a non-high-temperature scenario, where The non-high-temperature scenario includes that the temperature of the electronic device is less than the temperature threshold.

In another possible implementation, the determining module 904 may alternatively be configured to determine that the target sliding processing policy is the second sliding processing policy when a usage scenario of the electronic device is a non-text scenario, where the non-text scenario includes that a data amount of to-be-displayed content is greater than or equal to a data amount threshold, a type of the to-be-displayed content includes an image type or a video type, or a data amount of a text type in the to-be-displayed content is less than a data amount of the image type and/or the video type.

In another possible implementation, the determining module 904 may alternatively be configured to determine that the target sliding processing policy is the first sliding processing policy when the usage scenario of the electronic device is a text scenario, where the text scenario includes that the data amount of the to-be-displayed content is less than the data amount threshold, the type of the to-be-displayed content is the text type, or the data amount of the text type in the to-be-displayed content is greater than the data amount of the image type and/or the video type; and the to-be-displayed content is content newly loaded on the first page after the first page responds to the first sliding operation.

In another possible implementation, the determining module 904 may alternatively be configured to determine, when an application corresponding to the first page is an application in a slow sliding application list, that the target sliding processing policy is the second sliding processing policy.

The determining module 904 may alternatively be configured to determine, when an application corresponding to the first page is an application in a quick sliding application list, that the target sliding processing policy is the first sliding processing policy.

In another possible implementation, the determining module 904 may be further configured to determine whether the usage scenario of the foldable electronic device is a power-saving mode scenario.

The determining module 904 may be further configured to adjust the target sliding processing policy to the second sliding processing policy when the usage scenario of the foldable electronic device is the power-saving mode scenario.

The receiving module 902 may be further configured to receive a second sliding operation of the user sliding along the first direction on the first page.

The control module 903 may be further configured to control, based on the second sliding processing policy in response to the second sliding operation, the first page to slide along the first direction.

The determining module 904 may be further configured to determine whether the usage scenario of the foldable electronic device is a text scenario.

The determining module 904 may be further configured to adjust the target sliding processing policy to the first sliding processing policy when the usage scenario of the foldable electronic device is the text scenario.

The receiving module 902 may be further configured to receive a third sliding operation of the user sliding along the first direction on the first page.

The control module 903 may be further configured to control, in response to the third sliding operation based on the first sliding processing policy, the first page to slide along the first direction.

It should be understood that, division into units or modules (referred to as units below) in the apparatus is merely logical function division. During actual implementation, a part or all of the units or modules may be integrated into a physical entity or may be physically separated. In addition, the units in the apparatus may all be implemented in a form of software invoked by a processing element; may all be implemented in a form of hardware; or a part of the units are implemented in a form of software invoked by the processing element, and a part of the units are implemented in a form of hardware.

For example, the units may be processing elements that are independently arranged, or may be integrated in a chip of the apparatus for implementation. In addition, the units may alternatively be stored in a memory in a form of a program, and are invoked by a processing element of the apparatus to perform functions of the units. In addition, a part or all of the units may be integrated together, or may be implemented independently. The processing element herein may also be referred to as a processor and may be an integrated circuit having a signal processing capability. In an implementation process, steps in the foregoing method or the foregoing units may be implemented through a hardware integrated logical circuit in a processor element or may be implemented in a form of software invoked by a processing element.

In one example, the units in the apparatus may be configured as one or more integrated circuits configured to implement the foregoing method, for example, one or more ASICs, one or more DSPs, one or more FPGAs, or a combination of at least two integrated circuit forms thereof.

In another example, when the units in the apparatus can be implemented in a form of a processing element scheduling a program, the processing element may be a general-purpose processor, for example, a CPU or another processor that can invoke the program. For another example, these units may be integrated together and implemented in a form of a system on a chip SOC.

In an implementation, the units of the apparatus for implementing the corresponding steps in the method may be implemented in a form of a processing element scheduling a program. For example, the apparatus may include a processing element and a storage element, where the processing element invokes a program stored in the storage element, to perform the method described in the foregoing method embodiments. The storage element may be a storage element on a same chip as the processing element, namely, an on-chip storage element.

In another implementation, a program used for performing the foregoing method may be a storage element located on a different chip from the processing element, namely, an off-chip storage element. In this case, the processing element invokes or displays the program from the off-chip storage element onto the on-chip storage element, to invoke and perform the method described in the foregoing method embodiment.

For example, an embodiment of this application may further provide an apparatus, for example, an electronic device, which may include: a processor; and a memory, configured to store instructions executable by the processor. The processor is configured to enable, when executing the instructions, the electronic device to implement the display control method described in the foregoing embodiments. The memory may be located inside the electronic device or outside the electronic device. In addition, there may be one or more processors.

In still another implementation, the units of the apparatus for implementing the steps in the method may be configured as one or more processing elements, the processing elements may be provided on the foregoing electronic devices, and the processing elements may be integrated circuits, for example, one or more ASICs, one or more DSPs, one or more FPGAs, or a combination of these types of integrated circuits. These integrated circuits may be integrated together to form a chip.

For example, an embodiment of this application further provides a chip. The chip is applicable to the foregoing electronic device. The chip includes one or more interface circuits and one or more processors. The interface circuit and the processor are interconnected through a line. The processor receives and executes computer instructions from a memory of the electronic device through the interface circuit, to implement the method in the foregoing method embodiment.

An embodiment of this application further provides a computer program product, including computer instructions run on the foregoing electronic device.

Through the foregoing descriptions of the implementations, a person skilled in the art may clearly understand that, for the purpose of convenient and brief description, division into the foregoing functional modules is merely used as an example for illustration. During actual application, the foregoing functions may be allocated to different functional modules and implemented based on a requirement. That is, an inner structure of an apparatus is divided into different functional modules, to implement a part or all of the functions described above.

In the several embodiments provided in this application, it should be understood that the disclosed system, apparatus, and method may be implemented in other manners. For example, the described apparatus embodiment is merely an example. For example, the division of the modules or units is merely logical function division, and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts displayed as units may be one or more physical units, may be located at the one position, or may be distributed to a plurality of different positions. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and is sold or used as an independent product, the integrated unit may be stored in a readable storage medium. Based on such an understanding, the technical solutions of embodiments of this application essentially or the part contributing to the related art or a part or all of the technical solutions may be implemented in a form of a software product, for example, a program. The software product is stored in a program product such as a computer-readable storage medium and includes several instructions for instructing a device (which may be a single-chip microcomputer, a chip, or the like) or a processor (processor) to perform a part or all of the steps of the methods described in embodiments of this application. The foregoing storage medium includes: any medium that can store program code, for example, a USB flash drive, a mobile hard disk drive, a ROM, a RAM, a magnetic disk, or an optical disc.

For example, an embodiment of this application may further provide a computer-readable storage medium, storing computer program instructions thereon. When the computer program instructions are executed by an electronic device, the electronic device is enabled to implement the display control method in the foregoing method embodiment.

The foregoing descriptions are merely specific implementations of this application. However, the protection scope of this application is not limited thereto. Any variation or replacement within the technical scope disclosed in this application shall fall within the protection scope of this application. Therefore, the protection scope of this application should be subject to the protection scope of the claims.

## Claims

1. A display control method, applied to an electronic device, wherein the electronic device comprises at least two sliding policies; and the method comprises:
displaying, by the electronic device, a first page;
receiving, by the terminal device, a first sliding operation of a user sliding along a first direction on the first page; and
controlling, by the electronic device based on a target sliding processing policy in response to the first sliding operation, the first page to slide along the first direction, wherein
the at least two sliding processing policies comprise a first sliding processing policy and a second sliding processing policy; and when the target sliding processing policy is the first sliding processing policy, duration for which the first page is slid along the first direction is first duration, and a distance for which the first page is slid is a first distance; or
when the target sliding processing policy is the second sliding processing policy, duration for which the first page is slid along the first direction is second duration, and a distance for which the first page is slid is a second distance, wherein the first duration is greater than the second duration, and the first distance is greater than the second distance.

2. The method according to claim 1, wherein the first page is slid at a first initial velocity and a first friction coefficient when the electronic device executes the first sliding processing policy; or
the first page is slid at a second initial velocity and a second friction coefficient when the electronic device executes the second sliding processing policy, wherein the first initial velocity is greater than the second initial velocity, and the first friction coefficient is less than the second friction coefficient.

3. The method according to claim 1 or 2, wherein the electronic device is a foldable electronic device; and before controlling, by the electronic device based on the target sliding processing policy, the first page to slide along the first direction, the method further comprises:
determining, when a usage scenario of the foldable electronic device is a large-screen scenario, that the target sliding processing policy is the second sliding processing policy, wherein the large-screen scenario comprises that the foldable electronic device is in an unfolded state; or
determining, when the usage scenario of the foldable electronic device is a small-screen scenario, that the target sliding processing policy is the first sliding processing policy, wherein the small-screen scenario comprises that the foldable electronic device is in a folded state.

4. The method according to claim 1 or 2, wherein before controlling, by the electronic device based on the target sliding processing policy, the first page to slide along the first direction, the method further comprises:
determining, when a usage scenario of the electronic device is a power-saving mode scenario, that the target sliding processing policy is the second sliding processing policy; or
determining, when the usage scenario of the electronic device is a non-power-saving mode scenario, that the target sliding processing policy is the first sliding processing policy.

5. The method according to claim 1 or 2, wherein before controlling, by the electronic device based on the target sliding processing policy, the first page to slide along the first direction, the method further comprises:
determining, when a usage scenario of the electronic device is a high-temperature scenario, that the target sliding processing policy is the second sliding processing policy, wherein the high-temperature scenario comprises that a temperature of the electronic device is greater than or equal to a temperature threshold; or
determining, when the usage scenario of the electronic device is a non-high-temperature scenario, that the target sliding processing policy is the first sliding processing policy, wherein the non-high-temperature scenario comprises that the temperature of the electronic device is less than the temperature threshold.

6. The method according to claim 1 or 2, wherein before controlling, by the electronic device based on the target sliding processing policy, the first page to slide along the first direction, the method further comprises:
determining, when a usage scenario of the electronic device is a non-text scenario, that the target sliding processing policy is the second sliding processing policy, wherein the non-text scenario comprises that a data amount of to-be-displayed content is greater than or equal to a data amount threshold, a type of the to-be-displayed content comprises an image type or a video type, or a data amount of a text type in the to-be-displayed content is less than a data amount of the image type and/or the video type; or
determining, when the usage scenario of the electronic device is a text scenario, that the target sliding processing policy is the first sliding processing policy, wherein the text scenario comprises that the data amount of the to-be-displayed content is less than the data amount threshold, the type of the to-be-displayed content is the text type, or the data amount of the text type in the to-be-displayed content is greater than the data amount of the image type and/or the video type; and
the to-be-displayed content is content newly loaded on the first page after the first page responds to the first sliding operation.

7. The method according to claim 1 or 2, wherein before controlling, by the electronic device based on the target sliding processing policy, the first page to slide along the first direction, the method further comprises:
determining, when an application corresponding to the first page is an application in a slow sliding application list, that the target sliding processing policy is the second sliding processing policy; or
determining, when the application corresponding to the first page is an application in a quick sliding application list, that the target sliding processing policy is the first sliding processing policy.

8. The method according to claim 3, wherein when the usage scenario of the electronic device is the small-screen scenario, after controlling, by the electronic device based on the target sliding processing policy, the first page to slide along the first direction, the method further comprises:
determining whether the usage scenario of the foldable electronic device is a power-saving mode scenario;
adjusting the target sliding processing policy to the second sliding processing policy when the usage scenario of the foldable electronic device is the power-saving mode scenario;
receiving, by the foldable electronic device, a second sliding operation of the user sliding along the first direction on the first page; and
controlling, by the foldable electronic device based on the second sliding processing policy in response to the second sliding operation, the first page to slide along the first direction; and
determining whether the usage scenario of the foldable electronic device is a text scenario;
adjusting the target sliding processing policy to the first sliding processing policy when the usage scenario of the foldable electronic device is the text scenario;
receiving, by the foldable electronic device, a third sliding operation of the user sliding along the first direction on the first page; and
controlling, by the foldable electronic device based on the first sliding processing policy in response to the third sliding operation, the first page to slide along the first direction.

9. A display control method, applied to a foldable electronic device, wherein the foldable electronic device comprises a first screen body and a second screen body that are relatively disposed , and a display area of the second screen body is greater than a display area of the first screen body; and the method comprises:
controlling, when the foldable electronic device is in a folded state, the first screen body to display a first page;
receiving a first sliding operation of a user on the first screen body along a first direction; and
sliding the first page along the first direction for first duration in response to the first sliding operation, wherein a distance for which the first page is slid is a first distance; or
controlling, when the foldable electronic device is in an unfolded state, the second screen body to display the first page;
receiving the first sliding operation of the user on the second screen body along the first direction; and
sliding the first page along the first direction for second duration in response to the first sliding operation, wherein a distance for which the first page is slid is a second distance, wherein
the first duration is greater than the second duration, and the first distance is greater than the second distance.

10. An electronic device, wherein the electronic device comprises a processor and a memory configured to store instructions executable by the processor, wherein when the processor is configured to execute the instructions, the electronic device is enabled to perform the method according to any one of claims 1 to 9.

11. A computer-readable storage medium, storing computer program instructions thereon, wherein
when the computer program instructions are executed by an electronic device, the electronic device is enabled to perform the method according to any one of claims 1 to 9.
